# EUROPEAN PATENT APPLICATION

(11) **EP 4 726 317 A1**
(43) Date of publication of application: **15.04.2026**
(21) Application number: 25206362.3
(22) Date of filing: 02.10.2025
(51) Int. Cl.: F28F 1/02, B21D 53/06, H01M 10/613, H01M 10/625, H01M 10/6557, H01M 10/6567

(54) **METHOD FOR CONFIGURING COOLING TUBE OF BATTERY PACK AND COOLING TUBE OF BATTERY PACK**

(30) Priority: 08.10.2024 KR 20240136912
(71) Applicant: LG Energy Solution, Ltd., Seoul 07335 (KR)
(72) Inventor: JUNG, In-Hyuk, 34122 Daejeon (KR); OH, Kwang-Keun, 34122 Daejeon (KR); YANG, Jin-Oh, 34122 Daejeon (KR)
(74) Representative: Goddar, Heinz J.

(57) **Abstract**

Disclosed herein is a method for configuring a cooling tube for a battery cell array, a cooling tube for a battery cell array and a battery cell array. The method is for configuring a cooling tube having a plurality of channels allowing a cooling medium to pass therethrough, each channel extending along a length of the cooling tube. The method comprises determining a pressure drop ΔP across the cooling tube as a function of the number of channels N in the cooling tube and an aspect ratio D of the channels; determining an amount of deformation δ of one or more channels when the cooling tube is bent to fit an arrangement of battery cells of the battery cell array as a function of the number of channels N and the aspect ratio D of the channels; and determining a relationship of the number of channels N and the aspect ratio D of the channels to one or both of the pressure drop ΔP and the amount of deformation δ based on the determined pressure drop ΔP and the determined amount of deformation δ.

## Description

### TECHNICAL FIELD

The present disclosure relates to a method for configuring a cooling tube for a battery cell array (e.g., of a battery pack) and to a cooling tube for a battery cell array (e.g., of a battery pack). More particularly, the present disclosure relates to a method for configuring a cooling tube for a battery cell array with improved cooling efficiency and to a cooling tube for a battery cell array with improved cooling efficiency.

This application is based on and claims priority from Korean Patent Application No. 10-2024-0136912, filed on October 8, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attention for example as a new energy source for enhancing environment friendliness and energy efficiency in that the use of fossil fuels can be reduced greatly and no byproduct is generated during energy consumption.

Secondary batteries widely used at the preset include lithium-ion batteries, lithium polymer batteries, nickel cadmium batteries, nickel hydrogen batteries, nickel zinc batteries and the like. An operating voltage of the unit secondary battery cell, namely a unit battery cell, may be about 2.5V to 4.5V. Therefore, if a higher output voltage is desired, a plurality of battery cells may be connected in series to configure a battery pack. Additionally or alternatively, depending on the charge/discharge capacity desired for the battery pack, a battery pack may be configured by connecting a plurality of battery cells in parallel. Thus, the number of battery cells included in the battery pack may be variously set according to the desired output voltage and/or the desired charge/discharge capacity. Consequently, the number of battery cells in the battery pack may be adjusted depending on the desired output voltage and charge/discharge capacity.

Meanwhile, when configuring a battery pack by connecting a plurality of battery cells in series/parallel, it is common to configure the battery pack by adding battery cells and other components.

### DISCLOSURE

### Technical Problem

In a conventional battery pack, a cooling tube may be provided between battery cells to cool the battery cells. For the cooling tube, it may be important to secure heat transfer performance and minimize pressure loss to increase cooling efficiency.

Therefore, it may be desired to find a way to secure heat transfer performance and minimize pressure loss.

Therefore, the present disclosure is directed to providing a method for configuring a cooling tube for a battery cell array, in particular a battery cell array of a battery pack, and to a cooling tube for a battery cell array, in particular a battery cell array of a battery pack, which may secure heat transfer performance and minimize pressure loss.

However, the technical problems that the present disclosure seeks to solve are not limited to the above, and other problems not mentioned herein will be clearly understood by those skilled in the art from the following description.

### Technical Solution

The present disclosure provides a method for configuring a cooling tube for a battery cell array, a cooling tube for a battery cell array and a battery cell array as set out in the independent claims. Examples thereof are detailed in the dependent claims.

Any feature or combination(s) of features described herein with regard to the method according to the present disclosure may also be present for the cooling tube and/or the battery cell array according to the present disclosure, and vice-versa. For the sake of brevity and to avoid unnecessary repetition, certain feature(s) or combination(s) of features may therefore only be described once with regard to either the method, the cooling tube or the battery cell array, but may likewise apply to the other ones of the method, the cooling tube and the battery cell array.

In one aspect of the present disclosure, there is provided a method for configuring a cooling tube for a battery cell array, in particular a battery cell array of a battery pack. The cooling tube has a plurality of channels that allow a cooling medium to pass through the cooling tube. Each of the channels extends along a length of the cooling tube. A pressure drop ΔP across the cooling tube is determined as a function of the number of channels N in the cooling tube and an aspect ratio D of the channels. Furthermore, an amount of deformation δ of one or more channels when the cooling tube is bent to fit an arrangement of battery cells of the battery cell array is determined as a function of the number of channels N and the aspect ratio D of the channels. Based on the determined pressure drop and the determined amount of deformation, a relationship of the number of channels N and the aspect ratio D of the channels to one or both of the pressure drop ΔP and the amount of deformation δ is determined.

The method is for configuring (e.g., designing, engineering, constructing and/or optimizing) and, optionally, manufacturing (e.g., forming/producing) a cooling tube for a battery cell array. The battery cell array is not particularly limited and may be any (regular, in particular periodic, or non-regular) arrangement of battery cells. The battery cell array may be for use (e.g., be comprised) in a battery module and/or a battery pack (in particular a module-less (or module-frameless) battery pack), for example for use (e.g., comprised) in a vehicle. The battery cells may, without limitation, be or comprise cylindrical battery cells, prismatic battery cells, and/or pouch-type battery cells.

The cooling tube that is to be configured has a plurality of channels (which may also be referred to as cooling channels or, collectively, as the cooling channel herein) configured to allow a cooling medium such as water to flow through the cooling tube, wherein each of the channels may for example be embodied as detailed below for the cooling tube according to the present disclosure.

The (total) number of channels N in the cooling tube may be a parameter (e.g., a design or optimization parameter) that is to be configured (e.g., selected) using the method according to the present disclosure. As such, the number of channels in the cooling tube may be changed (e.g., varied) as part of the method according to the present disclosure, for example experimentally (e.g., by forming tubes having different numbers of channels) and/or theoretically (e.g., by simulation, modelling and/or other calculations). The number of channels N may for example be within (e.g., be varied within and/or be selected from) the range of 16 channels or less, in some examples 12 channels or less and in particular between 8 and 12 channels.

Additionally or alternatively, an aspect ratio D of the channels may be a parameter (e.g., a design or optimization parameter) that is to be configured (e.g., selected) using the method according to the present disclosure. As such, the aspect ratio of the cannels may be changed (e.g., varied) as part of the method according to the present disclosure, for example experimentally/in practice (e.g., by forming tubes with channels of different aspect ratios) and/or theoretically (e.g., by simulation, modelling and/or other calculation). The aspect ratio D may for example be within (e.g., be varied within and/or be selected from) the range of 4 or less, e.g., between 2.0 and 4.0 and in particular between 3.0 and 4.0.

As used herein, an aspect ratio of a channel may refer to the aspect ratio (lateral/transverse aspect ratio) of the respective channel in a cross-section perpendicular to a flow path (e.g., central axis and/or direction of flow) defined by the respective channel. The aspect ratio may for example be defined by a height (e.g., largest lateral/transverse physical dimension or major lateral axis) and a width (e.g., smallest lateral/transverse physical dimension or minor lateral axis) of the respective channel, for example perpendicular to a length/longitudinal direction of the respective channel along which the flow path extends.

All of the channels may have the same aspect ratio (corresponding to the aspect ratio D of the channels). In other examples, the aspect ratios of the individual channels may vary (e.g., within the ranges mentioned herein), in which case the aspect ratio D of the channels may for example refer to an average or median aspect ratio of the plurality of channels and/or to the aspect ratio of one or more of the channels.

A pressure drop AP across the cooling tube is determined, for example a pressure drop (e.g., pressure difference/differential pressure) between an inlet and an outlet of the cooling tube and/or between an inlet and an outlet of one (or more) of the channels and/or a pressure drop per unit length of the cooling tube and/or of one (or more) of the channels.

Furthermore, an amount of deformation δ of one or more channels (e.g., of each channel) is determined that occurs upon bending of the cooling tube to fit an arrangement of battery cells of the battery cell array. The arrangement of battery cells may comprise the entire battery cell array or a portion thereof (e.g., any plurality of battery cells within the battery cell array), for example a first array (e.g., a first row) of battery cells and/or a second array (e.g., a second row) of battery cells within the array of battery cells, e.g., as detailed below. The cooling tube may be bent to fit (e.g., conform to) a shape of the arrangement of battery cells, for example so as to be configured to contact (e.g., so as to be in contact with), in particular fit (e.g., to conform to) a shape, of each of the battery cells in the arrangement. This may in particular comprise providing (e.g., forming) a plurality of alternating convex and concave portions along the length of the cooling tube, e.g., as detailed below.

The amount of deformation δ may be (qualitative or quantitative) measure characterizing (e.g., quantifying) the deformation (e.g., a degree of deformation) of the respective channels (e.g., an outer surface thereof, in particular one intended to contact or be attached to a battery cell) that occurs upon the bending of the cooling tube (excluding the bending as such, e.g., a (degree of) deformation of a (lateral/transverse) cross-section of the respective channels). The amount of deformation may in particular characterize (e.g., quantify) a degree (e.g., extent or magnitude) of deviation from a desired (bent) shape, in particular from a shape of the arrangement of battery cells (e.g., a surface of one or more battery cells thereof). The amount of deformation may for example characterize a size and/or a number of non-contact spaces (e.g., voids/cavities) formed between the cooling tube (e.g., the respective channels) and the battery cells the when bringing the cooling tube in contact with (e.g., placing the cooling tube on) the arrangement of battery cells. Additionally or alternatively, the amount of deformation may for example characterize a curvature and/or a surface roughness/waviness of an outer surface of the cooling tube (e.g., an outer surface of the respective channels), in particular along a direction in which no bending is supposed to occur (e.g., the height direction). In one example, the amount of deformation characterizes or is a height of deformations of a surface of the cooling tube (e.g., formed, at least in part, by the respective channels), in particular a height of deformations of one or more cell attachment surfaces of the cooling tube, e.g., as described below.

Both the pressure drop ΔP across the cooling tube and the amount of deformation δ of the one or more channels may each be determined experimentally (e.g., by measuring the pressure drop and the amount of deformation, respectively) and/or theoretically (e.g., by simulation, modelling and/or other calculations). Accordingly, the bending of the cooling tube may also be performed experimentally (e.g., by actually bending the tube in practice) and/or theoretically (e.g., by simulating, modelling and/or otherwise calculating bending of the tube). In one example, one or both of the pressure drop and the amount of deformation may be determined using a mathematical formula (e.g., a predetermined formula obtained by fitting, interpolation, and/or extrapolation) for calculating the respective quantity based on parameters such as the number of channels N, the aspect ratio D, a length L of the cooling tube and/or a thickness T of a wall (e.g., rib) separating adjacent channels, e.g., as ΔP = f(N, D, L, T) and δ = f(N, D, T). The method may be computer-implemented (e.g., at least in part or in its entirety).

Both the pressure drop ΔP across the cooling tube and the amount of deformation δ of the one or more channels may each be determined as a function of the number of channels N in the cooling tube and an aspect ratio D of the channels. This may for example comprise determining the respective quantity (pressure drop and amount of deformation, respectively) for at least two different values, in some examples at least three, four, five or more different values of the respective parameter (i.e., number of channels and aspect ratio, respectively). Additionally or alternatively, this may comprise determining a change of the respective quantity for a change of the respective parameter (e.g., a change/difference in the respective quantity when changing the respective parameter by a certain amount/number).

Both the pressure drop ΔP across the cooling tube and the amount of deformation δ of the one or more channels may each be determined as a function of the number of channels N in the cooling tube and an aspect ratio D of the channels while maintaining external physical dimensions of the cooling tube (e.g., some or preferably all of a length, a height and a width of the cooling tube, e.g., as defined below with reference to the cooling tube according to the present disclosure. Put differently, the number of channels N and the aspect ratio D may be varied without changing the external shape of the cooling tube.

Based on the determined pressure drop AP and the determined amount of deformation δ, a relationship between the number of channels N and the aspect ratio D of the channels on one hand and one or both of the pressure drop ΔP and the amount of deformation δ on the other hand may be determined in some examples. This relationship may for example be or comprise a correlation between the respective parameter (i.e., number of channels and aspect ratio, respectively) and one or both quantities (i.e., the pressure drop ΔP and/or the amount of deformation δ). For example, it may be determined (for one or both parameters) whether there is a positive or negative correlation between the respective parameter and the respective quantity (i.e., an increase and decrease, respectively, in the respective quantity when the respective parameter increases). Optionally, a magnitude of the respective correlation may be determined for one or both parameters, e.g., qualitatively (such as strong or weak) and/or quantitatively (e.g., determining a respective correlation coefficient). In some examples, a functional relationship between the respective parameter(s) and the respective quantity/quantities may be determined for one or both parameters (for example by fitting, interpolation and/or extrapolation), e.g., a mathematical function of the kind ΔP = f(N, D) and δ = f(N, D).

The method may further comprise configuring and/or manufacturing the cooling tube based on the determined relationship (e.g., the determined correlations) and/or based on the determined pressure drop ΔP and/or amount of deformation, in particular configuring (e.g., selecting) one or both of the number of channels N and the aspect ratio D of the channels and/or manufacturing the tube with a certain number of channels N and/or a certain aspect ratio D based on the determined relationship and/or based on the determined pressure drop ΔP and/or amount of deformation. The cooling tube may for example be configured/manufactured so as to maximize cooling efficiency of the cooling tube, e.g., by minimizing one or both of pressure loss (e.g., the pressure drop ΔP) and deformation (e.g., amount of deformation δ), for example to minimize deformation while maintaining pressure loss within an acceptable range (e.g., below a predetermined threshold).

In some examples, the determination of the relationship of the number of channels N, the aspect ratio D (and, optionally, the thickness T as introduced below) to one or both of the pressure drop ΔP and the amount of deformation δ based on the determined pressure drop ΔP and the determined amount of deformation δ may occur implicitly, e.g., as part of the determination of the pressure drop ΔP and/or the amount of deformation δ and/or as part of the selection of the number of channels N, the aspect ratio D and/or the thickness T. In other examples, the determination of said relationship (or at least the explicit determination thereof) may be omitted entirely. Instead, one or both of the number of channels N and the aspect ratio D (and, optionally, the thickness T) may for example be selected based on one or both of the determined pressure drop ΔP and the determined amount of deformation δ.

In some examples, the method may comprise providing the cooling tube and changing the number of channels N and the aspect ratio of the channels in the cooling tube. Accordingly, in one example of the present disclosure, there is provided a method for configuring a cooling tube for a battery cell array, in particular a cooling tube of a battery pack, comprising: providing a cooling tube having a plurality of channels through which a cooling medium passes, the cooling tube defining a length, a width and a height, each channel extending across the length of the cooling tube; changing the number of channels N and an aspect ratio D of the channels in the cooling tube; determining a pressure drop ΔP across the cooling tube for the change in the number of channels N and the aspect ratio D of the channels (for example using a mathematical formula ΔP = f(N, D, L, T), where L is the length of the cooling tube and T is a thickness of a wall, e.g., a rib, separating adjacent channels); determining deformation δ of each channel (for example using a mathematical formula δ = f(N, D, T)) when the cooling tube is bent to fit the arrangement of battery cells of the battery cell array and battery pack, respectively, for the change in the number of channels N and the aspect ratio D of the channels; and determining a relationship between (e.g., selecting/choosing) factors including the number of channels N, the aspect ratio D of the channels, and, optionally, the thickness T of the wall/rib with reference to the pressure drop ΔP and the deformation δ, for example so as to maximize cooling efficiency of the cooling tube, wherein the cooling efficiency may, e.g., be related to minimizing pressure loss and minimizing deformation.

In some examples, one or both of the pressure drop ΔP and the amount of deformation δ may each additionally be determined as a function of a thickness T of a wall (e.g., rib) separating adjacent channels (i.e., as a function of the thickness T as well as of the other parameters, i.e., the number of channels N and the aspect ratio D), for example as described above for the determination as a function of the other parameters. Optionally, the relationship between the number of channels N, the aspect ratio D and the thickness T to one or both of the pressure drop ΔP and the amount of deformation δ may be determined, for example by additionally determining a (respective) correlation of the thickness T with the pressure drop ΔP and/or the amount of deformation δ. This relationship (e.g., the determined correlations) may be used for configuring and/or manufacturing the cooling tube, in particular configuring (e.g., selecting) the thickness of the wall(s) between adjacent channels and/or manufacturing the tube with a particular thickness of the wall(s) between adjacent channels based on the determined relationship.

The thickness T may for example be the thickness (e.g., mean or minimum thickness) of a particular wall (e.g., rib) separating two adjacent channels or a mean (e.g., average or median) thickness of a plurality of walls each separating a respective pair of adjacent channels. In some examples, the thickness of some or all walls between adjacent channels (e.g., at least the walls between adjacent inlet channels and/or the walls between adjacent outlet channels) may be the same (and, optionally, may correspond to the aforementioned thickness T).

The method may further comprise selecting (e.g., choosing) one or both of the number of channels N and the aspect ratio D of the channels, and optionally the thickness T of the wall separating adjacent channels, based on the determined relationship. In some examples, the cooling tube may then be manufactured with the selected number of channels N and/or the selected aspect ratio D of the channels, and optionally with the selected thickness T.

The respective parameters may be selected so as to maximize cooling efficiency of the cooling tube (for example a heat transfer (e.g., amount of heat/energy removed) at given flow rate and/or supply pressure of the cooling medium), in particular taking into account the deformation of the channels (i.e., under real world conditions when arranged on/attached to the arrangement of battery cells). The cooling efficiency may for example be maximized (based on the determined relationship) by minimizing pressure loss (e.g., the pressure drop ΔP) and/or minimizing deformation (e.g., the amount of deformation δ), for example within predetermined ranges for the parameters N, D and/or T (for example the ranges as set out herein) and/or for the other quantity of the pressure drop and amount of deformation (for example the ranges as set out herein). In some examples, this may comprise finding a compromise between both quantities that maximizes cooling efficiency, for example minimizing deformation to the extent possible while maintaining acceptable pressure loss (e.g., below a predefined threshold) and/or vice-versa, and/or optimizing a combined cooling efficiency measure taking into account both pressure loss and deformation (for example a weighted combination, e.g., sum, of both quantities).

In one example, the number of channels N and/or the aspect ratio D of the channels (and, optionally, also the thickness t of the wall separating adjacent channels) are selected so as to minimize the amount of deformation δ within a preset range for the pressure drop ΔP (and, optionally, within preset ranges for the respective parameters, e.g., as set out below). For example, the amount of deformation δ may be minimized while maintaining the pressure drop (e.g., as quantified by a pressure drop ΔP per unit length) below a predefined threshold. The pressure drop ΔP per unit length of each channel (e.g., the pressure drop ΔP across the cooling tube divided by the average length of the channels, the pressure drop ΔP per unit length of the respective channel averaged over all channels and/or the pressure drop ΔP per unit length of the respective channel for each of the channels individually) may for example be less than 7 kPa/m or less, preferably 6.67 kPa/m or less and most preferably 6.25 kPa/m or less for a cooling medium flow rate of 1 liter/minute (e.g., through the cooling tube, i.e., the plurality of channels as a whole).

The number of channels N may for example be selected to be (e.g. selected from the range of) 12 channels or less, in some examples 10 channels or less. The number of channels N may in particular be selected to be (e.g., selected from the range) between 8 and 12 channels, in some examples between 8 and 10 channels. Additionally or alternatively, the pressure drop ΔP and/or the amount of deformation δ may be determined within the (e.g., across the entire) aforementioned ranges, for example by varying the number of channels within the (e.g., across the entire) respective range.

The aspect ratio D of the channels, in some examples the aspect ratio of each channel, may for example be selected to be (e.g. selected from the range of) 4 or less, preferably to be between 3.1 and 3.6 and most preferably to be between 3.4 and 3.5. Additionally or alternatively, the pressure drop ΔP and/or the amount of deformation δ may be determined within the (e.g., across the entire) aforementioned ranges, for example by varying the aspect ratio D of the channels within the (e.g., across the entire) respective range.

The thickness of the wall separating adjacent channels, in some examples the thickness of each wall separating adjacent inlet channels and/or the thickness of each wall separating adjacent outlet channels, may for example selected to be (e.g. selected from the range of) 0.4 mm or less, preferably to be between 0.3 mm and 0.4 mm and most preferably to be between 0.32 mm and 0.36 mm. Additionally or alternatively, the pressure drop ΔP and/or the amount of deformation δ may be determined within the (e.g., across the entire) aforementioned ranges, for example by varying the thickness T of the wall separating adjacent channels within the (e.g., across the entire) respective range.

Manufacturing the cooling tube may for example comprise providing (and optionally forming) a cooling tube having the selected number of channels and/or the selected aspect ratio D of the channels (and, optionally, the selected thickness T of the wall separating adjacent channels).

Manufacturing the cooling tube may optionally further comprise bending the provided cooling tube to fit (e.g., a shape of) the arrangement of battery cells of the battery cell array. The cooling tube may in particular be bent to, at least segmentwise (i.e., in a plurality of segments of the cooling tube), conform to (e.g., to follow/have the same shape as) a shape of the arrangement of battery cells (e.g., a shape or contour of outer surfaces of the battery cells in the arrangement), for example so as to be configured to, at least segmentwise, contact each of the battery cells in the arrangement.

The cooling tube may for example be bent through a pressing process, e.g., using one or more dies and/or molds. For example, the cooling tube may be pressed between a pair of dies and/or molds (which may be shaped so as to impress the desired bent shape onto the cooling tube).

The amount of deformation δ of the one or more channels that is determined may for example be the amount of deformation δ of the one or more channels when the cooling tube is bent to fit a shape of a first linear array (e.g., a first row) of the battery cells of the battery cell array, in particular such that the cooling tube contacts (and preferably fits the shape of) each battery cell of the first linear array. Put differently, the aforementioned arrangement of battery cells of the battery cell array that the cooling tube is bent to fit may be embodied as a first linear array. As used herein, the term linear array (or one-dimensional array) may for example refer to any one-dimensional arrangement/array of battery cells (e.g., arrangement that is indexable by a single spatial coordinate) without, however, necessarily requiring the respective battery cells to be arranged in a straight line (but the battery cells may for example also be arranged along a curved line and/or in an alternating (e.g., zigzag) arrangement). A linear array may in particular refer to a row (or part thereof) of the battery cell array.

In some examples, the pressure drop ΔP across the cooling tube as a function of the number of channels N in the cooling tube and the aspect ratio D of the channels (and, optionally, the thickness T) may be determined based on one or both of a viscosity and a flow rate of the cooling medium (through the cooling tube/the plurality of channels as a whole), for example for a particular viscosity or viscosity range (e.g., between 0.1 mPa·s and 10 mPa·s, in some examples between 0.5 mPa·s and 2.0 mPa·s) and/or a particular flow rate (e.g., 0.5 liter per minute or 1.0 liter per minute) or flow rate range (e.g., between 0.1 liter per minute and 5 liter per minute, in some examples between 0.5 liter per minute and 2.0 liter per minute) of the cooling medium and/or as a function of one or both of the viscosity and the flow rate of the cooling medium (e.g., within the aforementioned ranges). The cooling medium may in particular be water.

The relationship of the number of channels N, the aspect ratio D of the channels and, optionally, the thickness T of the wall between adjacent channels, to the pressure drop ΔP and/or the amount of deformation δ may be determined using a correlation analysis. This may for example comprise, for some or all of the parameters N, D and T, determining a correlation between the respective parameter and the pressure drop ΔP and/or a correlation between the respective parameter and the amount of deformation δ, e.g., a qualitative and/or quantitative correlation and/or whether there is a positive or negative correlation, for example as detailed above. Additionally or alternatively, the correlation analysis may comprise determining correlations between the parameters and/or between the pressure drop ΔP and the amount of deformation δ and/or multi-factor correlations between two or more parameters and the pressure drop ΔP and the amount of deformation δ (e.g., a correlation between a first parameter and the pressure drop ΔP and/or the amount of deformation δ as a function of a second parameter).

The plurality of channels may include a first channel set and a second channel set. The first channel set may allow (e.g., be configured to allow) the cooling medium to enter the cooling tube. The channels comprised in (e.g., forming) the first channel set may be inlet channels (also referred to as inflow channels), which may, e.g., be in fluid communication with an inlet of the cooling tube (and, e.g., at their opposing end, with the channels of the second channel set). The second channel set may allow (e.g., be configured to allow) the cooling medium to exit from the cooling tube. The channels comprised in (e.g., forming) the second channel set may be outlet channels (also referred to as outflow channels), which may, e.g., be in fluid communication with an outlet of the cooling tube (and, e.g., at their opposing end, with the inlet channels). Each inlet channel may be connected to a respective outlet channel. The respective pairs of inlet and outlet channels may for example be formed as segments of a same channel, e.g., with the inlet channel and the outlet channel extending in opposite directions

In some examples, the pressure drop ΔP across the cooling tube and the amount of deformation δ of the one or more channels may be determined as a function of the (total) number of channels N in the cooling tube (and of the aspect ratio D and, optionally, the thickness T) with the number of channels in the first channel set being the same as (equal to) the number of channels in the second channel set. Put differently, the number of channels in the first and second channel sets may always be set to be equal to each other (for example varied in lockstep, i.e., by the same number of channels, when varying the (total) number of channels N in the cooling tube). For example, the number of channels in the first channel set and the number of channels in the second channel set may each be half the (total) number of channels N (e.g., five inlet channels and five outlet channels for a total of ten channels).

The method according to the present disclosure may for example be used for configuring the cooling tube according to the present disclosure. Accordingly, the cooling tube according to the present disclosure may have been configured (and optionally manufactured) using the method according to the present disclosure, e.g., be the result of an optimization conducted using the method according to the present disclosure.

In any of the above, the aspect ratio of each channel (including the aspect ratio D) may be defined by a height and a width of each channel (e.g., as the ratio of height divided by width).

In any of the above, some or all of the channels may have an elongate (transverse) cross-section with curved (e.g., rounded and/or arcuate) ends, e.g., as described below for the cooling tube according to the present disclosure. Put differently, each channel may be defined as a long shape with curved top and bottom ends.

In any of the above, the thickness of each wall between adjacent channels (e.g., the thickness T) may be a minimum distance between adjacent channels. Some or all of the walls between adjacent channels may be embodied as ribs.

In any of the above, bending the cooling tube may include a step of bending the cooling tube to fit a shape of a first linear array of the battery cells of the battery cell array (e.g., a first linear array of the battery cells of the battery pack).

In any of the above, the cooling tube may contact each battery cell of the first linear array.

In any of the above, the cooling tube may be configured to be disposed between the first linear array of the battery cells of the battery pack and, optionally, a second linear array of the battery cells, a first surface of the cooling tube may contact the first linear array, and, optionally, a second surface of the cooling tube may contact the second linear array.

In any of the above, the step of determining a pressure drop ΔP may include a step of determining the pressure drop ΔP across the cooling tube for the change in each of the number of channels N and the aspect ratio D of the channels based on a viscosity and a flow rate of the cooling medium.

In any of the above, the step of determining a relationship between factors may include a step of determining the relationship between the number of channels N, the aspect ratio D of the channels, the pressure drop ΔP, and the deformation δ using a correlation analysis.

In any of the above, the plurality of channels may include a first channel set and a second channel set, the first channel set allowing the cooling medium to enter the cooling tube, the second channel set allowing the cooling medium to exit from the cooling tube.

In any of the above, the cooling tube may be configured to include five or less channels for each of the first channel set and the second channel set, the aspect ratio of each channel may be 3.45 or less, and the thickness of the rib may be 0.34 mm or less.

In any of the above, the pressure ΔP per unit length of each channel may be 6.67 kPa/m or less for a cooling medium flow rate of 1 liter/minute.

In another aspect of the present disclosure, there is provided a cooling tube for a battery cell array, in particular a battery cell array of a battery pack. The cooling tube comprises a plurality of channels configured to allow a cooling medium to flow through the cooling tube. The cooling tube is bent to correspond to a first array of battery cells of the battery cell array for a first side of the cooling tube to contact the first array.

The plurality of channels (e.g., their number and/or the aspect ratio of one or more, in some examples each, channel) may be configured to minimize one or both of a pressure drop of the cooling medium and a channel deformation that occurs when the cooling tube is bent. Thereby, cooling efficiency of the cooling tube may be maximized. The cooling tube may for example have been configured (and optionally manufactured) using the method according to the present disclosure.

In some examples, the plurality of channels may for example have (e.g., be formed by or consist of) 12 channels or less, in some examples 10 channels or less. The plurality of channels may in particular have between 8 and 12 channels, in some examples between 8 and 10 channels and in one example 10 channels. The cooling tube may not comprise any channels for the cooling medium other than said plurality of channels (e.g., said plurality of channels may be the only channels within the cooling tube).

Additionally or alternatively, some or all of the plurality of channels may for example each have an aspect ratio within a certain range, e.g., as detailed below. Further additionally or alternatively, a wall between adjacent channels may for example have a thickness within a certain range, e.g., as also detailed below.

The above measures may, individually or in conjunction, improve cooling efficiency of the cooling tube by reducing the pressure drop of the cooling medium across the plurality of channels and/or the channel deformation upon bending of the tube.

Accordingly, in one example of the present disclosure, there is provided a cooling tube of a battery pack, comprising: a plurality of channels configured to allow a cooling medium to flow through the cooling tube, each channel having an aspect ratio defined by a height and a width, wherein the cooling tube is bent to correspond to a first linear array of battery cells of the battery pack so that a first side of the cooling tube contacts the first linear array, and wherein the plurality of channels and the aspect ratio of each channel are configured to minimize a pressure drop of the cooling medium and minimize channel deformation that occurs when the cooling tube is bent, thereby maximizing cooling efficiency of the cooling tube.

In any of the above, the cooling tube may be provided as part of the battery cell array (i.e., may be arranged/comprised in the battery cell array), e.g., as part of the battery pack or as part of a battery module. In other examples, the cooling tube may be provided as a separate unit for use with a battery cell array (e.g., a battery pack).

The plurality of channels may be connected in parallel (e.g., form multiple channels extending in parallel between an inlet and an outlet of the cooling tube) and/or in series (e.g., as pairs of inlet and outlet channels as detailed below for as portions of a single channel extending between an inlet and outlet of the cooling tube). Each of the channels may be in fluid communication with (e.g., connected to or extending to/from) one or both of the inlet and the outlet of the cooling tube so as to allow the cooling medium to flow through the cooling tube (e.g., to, individually or in conjunction, provide a fluid path between the inlet and the outlet of the cooling tube).

Some or all of the channels may extend along a length, optionally across the entire length, of the cooling tube (e.g., along the longitudinal direction of the cooling tube).

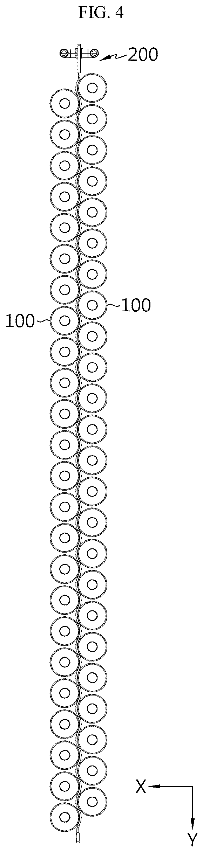

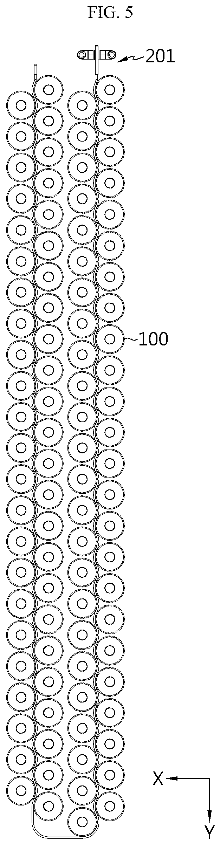

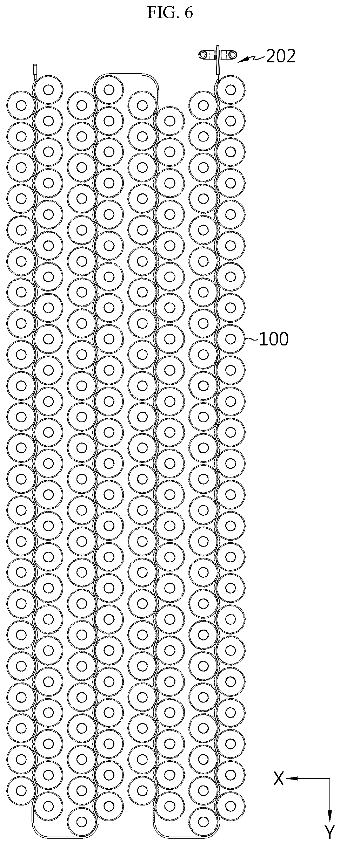

As used herein, the length of the cooling tube (and similarly the longitudinal or length direction) may refer to the largest extent (e.g., largest physical dimension or major axis) of the cooling tube (and the direction or axis of largest extent, respectively), noting that the cooling tube (in addition to being bent, e.g., having alternating convex and concave portions) may not always extend along an (at least substantially) straight line (as, e.g., in FIG. 4 described below) but in some examples may also extend along, e.g., a U-shaped path (e.g., back and forth between adjacent pairs of linear arrays/rows of battery cells, see, e.g., FIG. 5 described below) or a meandering (e.g., zigzag) path (e.g., repeatedly back and forth between a plurality of pairs of linear arrays/rows of battery cells, see, e.g., FIG. 6 described below). In the latter cases, the length of the cooling tube may for example refer to the (e.g., U-shaped or meandering) path or path length along which the cooling tube (primarily) extends (and the orientation of the longitudinal direction may vary depending on the position along the length of the cooling tube).

A thickness or width of the cooling tube (and similarly the thickness or width direction) may for example refer to the smallest extent (e.g., smallest physical dimension or minor axis) of the cooling tube (and to the direction or axis of smallest extent, respectively). A height of the cooling tube (and similarly the height direction) may for example refer to the largest transverse/lateral extent (e.g., largest transverse/lateral physical dimension or major transverse/lateral axis) in a plane perpendicular to the longitudinal direction (and to the direction or axis of largest transverse/lateral extent, respectively) and/or to the extent or direction perpendicular to the length and width directions.

The cooling tube may for example be embodied as an elongated plate, e.g., as a thin and narrow long plate with the length of the cooling tube being substantially larger (e.g., at least five times, in some examples at least ten times larger) than its height and its height being substantially larger than its thickness/width.

Dimensions and directions with regard to the channels may be denoted correspondingly, e.g., the length, width and height of a channel may for example refer to the (direction of) largest extent (e.g., largest physical dimension or major axis), the (direction of) smallest extent (e.g., smallest physical dimension or minor axis) and the (direction of) largest transverse extent (e.g., largest lateral physical dimension or major lateral axis), respectively. In some examples, some or all of the length, width and height directions of (some or all of) the channels may be aligned with the respective direction of the cooling tube (e.g., the channels may have their minor and major lateral axes along the width and height direction of the cooling tube).

The plurality of channels may be arranged (with respect to each other) along an (e.g., straight) line, in particular along the height direction of the cooling tube (e.g., such that the channels are spaced apart from each other along the height direction). The height direction (e.g., major lateral axis) of the channels may extend along said line (and, accordingly, the width direction (minor lateral axis) of the channels, e.g., perpendicular to said line).

Some or all, preferably each of the channels, may have an elongated (transverse) cross-section (e.g., with an aspect ratio as detailed below) with, optionally, curved (e.g., rounded and/or arcuate) ends (e.g., curved top and bottom ends). The respective channel(s) may for example have a pair of (e.g., parallel or substantially parallel) sidewalls connected by a curved wall portion at either end. The curved wall portion may for example follow an (e.g., circular or elliptical arc). A curvature of the curved wall portion may not exceed a predetermined threshold such as 10 mm⁻¹, in some examples 5 mm⁻¹, in some examples 2 mm⁻¹ and in one example 1.5 mm⁻¹, e.g., so as to avoid sharp edges or corners which may facilitate deformation.

The cooling tube is bent (e.g., has a bent shape) to correspond to (e.g., fit) a first array (in particular to a first linear array such as a first row) of battery cells of the battery cell array for the first side (which may, e.g., extend along the length and height directions) of the cooling tube to contact the first array (e.g., such that the first side of the cooling tube is configured to contact the first array, in particular each battery cell of the first array). The cooling tube may for example be bent in a plane perpendicular to the height direction (e.g., introducing bending in the width direction). The cooling tube may be bent to fit (e.g., conform to) a shape of the first array of battery cells, e.g. for the first side of the cooling tube to conform to a shape or contour of outer surfaces of the battery cells in the first array. As used herein, the cooling tube contacting or being in contact with the first array (or a battery cell) is intended to not only encompass direct contact therebetween but also indirect contact via, e.g., a (thin, e.g., < 1 mm, preferably smaller than 0.4 mm) adhesive and/or thermally conductive material arranged therebetween

Preferably, the cooling tube is bent to additionally correspond to (e.g., fit) a second array (in particular to a second linear array such as a second row) of battery cells of the battery cell array for a second side of the cooling tube opposite to the first side to contact the second array, e.g., as described herein of the first side. This may for example allow for arranging the cooling tube between the first and second arrays, e.g. as detailed below for the battery cell array according to the present disclosure.

The cooling tube (e.g., the first side thereof and, optionally, also the second side thereof) may for example comprise a plurality of concave portions (e.g., segments), each of which may be configured to receive (e.g., come in contact with and, optionally, accommodate at least part of) one of the battery cells. The concave portions may be each bent to fit a respective battery cell (e.g., conform to a shape thereof), for example extend along an (e.g., circular or elliptical) arc for a cylindrical battery cell. The concave portions may each for example be recessed (e.g., with respect to an adjacent portion of the cooling tube such as an adjacent flat or convex portion) in the thickness direction, for example by between 1 mm and 30 mm, in some examples by between 2 mm and 20 mm, in some examples by between 3 mm and 10 mm, in one example by between 4 mm and 8 mm. The concave portions may be separated by flat or preferably convex portions of the cooling tube arranged therebetween (e.g., alternatingly with the concave portions).

Preferably, the first and second side of the cooling tube have inverted shapes (e.g., by bending of the cooling tube), for example such that the second side comprise a (respective) convex portion opposite to each concave portion on the first side and vice-versa (or put differently, formation (e.g., bending) of a concave portion on the first side may result in a convex portion opposite thereto on the second side). For example, concave portions, and optionally the battery cells received therein, may be alternatingly arranged on the first and second side, respectively, along the length of the cooling tube (e.g., in a zigzag pattern with a first concave portion on the first side, the a second concave portion of the second side followed by a third concave portion on the first side and then a fourth concave portion on the second side and so on) and on each of the first and second sides, concave and convex portions are arranged alternatingly along the length of the cooling tube.

In some examples, the plurality of channels may include (e.g., consist of) a first set of channels/first channel set (inlet/inflow channels) for an inflow of the cooling medium and a second set of channels/second channel set (outlet/outflow channels) for an outflow of the cooling medium, for example as described above for the method according to the present disclosure. The first channel set and the second channel set may each be grouped (e.g., spaced apart from each other) along a direction, in particular the height direction of the cooling tube, for example such that the first channel set is arranged in a first region along said direction (e.g., an upper or lower region of the cooling tube) spaced apart from a second region along said direction (e.g., a lower and upper region, respectively, of the cooling tube) in which the second channel set is arranged.

Each of the first and second channel set may for example have (e.g., be formed by or consist of) 4 to 6 channels, preferably 5 channels. Additionally or alternatively, the first and second channel sets may have the same number of channels each.

Each of the channels may have an aspect ratio defined by a height and a width of the respective channel. The aspect ratio of some or all (and preferably each) of the channels may for example be 4 or less (e.g., between 3.0 and 4.0), preferably between 3.1 and 3.6, most preferably between 3.4 and 3.5, and in particular 3.45.

Additionally or alternatively, the height of some or all (and preferably each) of the channels may for example be between 5.0 mm and 6.5 mm, preferably between 5.6 mm and 6.2 mm, in some examples between 5.6 mm and 6.1 mm, most preferably between 6.0 mm and 6.1 mm, in particular between 6.00 mm and 6.10 mm, and in one example 6.08 mm.

Additionally or alternatively, the width of some or all (and preferably each) of the channels may for example be between 1.6 mm and 1.9 mm, preferably between 1.7 mm and 1.8 mm, in some examples between 1.70 mm and 1.80 mm, most preferably between 1.74 mm and 1.78 mm, and in particular 1.76 mm.

Additionally or alternatively, a wall (i.e., at least one wall) between (e.g., separating) adjacent channels (e.g., all walls between adjacent channels of the first set of channels and/or all walls between adjacent channels of the second set of channels) may have a thickness of 0.4 mm or less, wherein preferably said thickness is between 0.3 mm and 0.4 mm, in some examples between 0.30 mm and 0.40 mm, most preferably between 0.32 mm and 0.36 mm and in particular 0.34 mm. In some examples, all walls between adjacent channels of the first set of channels and/or all walls between adjacent channels of the second set of channels may have a same thickness (which may or may not be the same for the first and second channels), e.g., within the aforementioned ranges. A wall separating the first and second sets of channels (for example separating an (e.g., outermost) channels in the first set of channels from an adjacent channel in the second set of channels) may have a different and in particular larger thickness (denoted as c herein) than the walls between adjacent channels within the respective set. The thickness c may for example be between 2 times and 20 times larger, in some examples between 5 times and 15 times larger than then thickness of the walls between adjacent channels of the first set of channels and/or the thickness of the walls between adjacent channels of the second set of channels).

Some or all walls between adjacent channels (e.g., all walls between adjacent channels of the first set of channels and/or all walls between adjacent channels of the second set of channels) may be embodied as ribs (e.g., bar-, beam-, strut- and/or web-like structures). The walls (e.g., ribs) may extend between opposing sides (e.g., sidewalls) of the cooling tube, e.g., so as to separate an inner volume thereof into the plurality of channels.

Some or all walls between adjacent channels may each have a uniform thickness or preferably a (spatially) varying thickness, e.g., so as to accommodate curved ends of the channels. In the latter case, the thickness of the respective wall may for example refer to the minimum thickness of the wall.

In some examples, the plurality of channels may be configured such that a pressure drop per unit length of each of the channels is 7 kPa/m or less, preferably 6.67 kPa/m or less and most preferably 6.25 kPa/m or less, for a cooling medium flow rate of 1 liter/minute (e.g., through the cooling tube, i.e., the plurality of channels as a whole), wherein the cooling medium may for example be water.

In some examples, the first side of the cooling tube may comprise a (respective) cell attachment surface for each of the battery cells in the first array. The cell attachment surfaces may be configured to contact (e.g., across its entire area) and, optionally, be attached to the respective battery cell (e.g., an outer surface thereof), for example by means of an adhesive. The cell attachment surfaces may for example be formed by the surfaces of the aforementioned concave portions of the cooling tube.

The cell attachment surfaces may each be a flat surface that is bent to fit (e.g., conform to/have the same shape as) a shape of the respective battery cell (e.g., a portion of the outer surface thereof). The cell attachment surfaces may be referred to as being flat/a flat surface in the sense of the cell attachment surface having a low/lower degree of deviation (e.g., deformation) from the desired bending shape (e.g., the shape of the respective battery), in particular with respect to the cell non-attachment surfaces introduced below. The cell attachment surfaces may for example exhibit a low degree of surface roughness/waviness, e.g., only minor deformations within the below mentioned ranges. Additionally or alternatively, the cell attachment surfaces may for example have a same direction of curvature (i.e., the curvature of the cell attachment surface having the same sign, e.g., in the desired bending direction) across the entire or substantially the entire (respective) cell attachment surface (e.g., at least 80%, in some examples at least 90% of the cell attachment surface, for example with the exception of the below described deformations) and preferably a uniform or substantially uniform curvature (e.g., varying by less than a factor of three, in some examples less than a factor of two, in one example less than 50% and in one example less than 20%) across the entire or substantially the entire (respective) cell attachment surface.

A height of deformations of the cell attachment surfaces (e.g., a height/depth of depressions and/or protrusions of the channels, e.g., the outer surface thereof forming the cell attachment surfaces) may for example be no more than 0.3 mm, preferably no more than 0.2 mm, most preferably no more than 0.1 mm and in one example no more than 0.05 mm. The height of deformations may for example be defined as an average profile height from mean surface Ra, in some examples average peak-to-valley height/variation and in one example maximum peak-to-valley height/variation. The height of deformations may for example be measured along one or both of the height direction (along which no bending may be supposed to occur in some examples) and/or the length direction (in which a predetermined bending/curvature may be supposed to occur).

The second side of the cooling tube opposite to the first side may comprise a cell non-attachment surface opposite to each cell attachment surface. The cell-non-attachment surface may for example not be to be in contact with or attached to a battery cell but may for example be to face a space (e.g., gap) between adjacent battery cells. The cell non-attachment surfaces may for example be formed by the surfaces of the aforementioned convex portions of the cooling tube.

In some examples, the cell non-attachment surfaces may be non-flat surfaces with greater deformation than the respective cell attachment surface. For example, the height of deformations of the cell non-attachment surfaces may be larger, in some examples at least 20%, in some examples at least 50% larger and in one example at least a factor of two larger than the height of deformations of the cell attachment surfaces. Additionally or alternatively, the cell non-attachment surfaces may, e.g., exhibit larger variations in and/or degrees of curvature than the cell attachment surfaces.

In another aspect of the present disclosure, there is provided a battery cell array, in particular a battery pack comprising the battery cell array. The battery cell array comprises a plurality of battery cells and the cooling tube according to the present disclosure (in accordance with any one of the embodiments and examples disclosed herein).

The battery cell array is not particularly limited, in particular as regards the arrangement and number of battery cells as well as potential applications (e.g., the entity that the battery cell array is to be used with/in or is comprised in, which may for example be, without limitation, a battery pack, a battery module and/or a vehicle). The battery cell array may for example be embodied as described above for the method according to the present disclosure.

The plurality of battery cells may be arranged in at least a first array of battery cells and, optionally, a second array of battery cells (i.e., the battery cell array may comprise at least the first array of battery cells, which may also be referred to as the first sub-array, and, optionally, the second array/sub-array of battery cells, which may also be referred to as the second sub-array). The cooling tube may for example be disposed between the first and second arrays of battery cells. In some examples, the battery cell array may comprise one or more further arrays/sub-arrays of battery cells, for example at least a third array and, optionally, a fourth array. Each of these arrays/sub-arrays may be a linear array and in particular a row of the battery cell array. The arrays/sub-arrays may for example be arranged as a plurality of parallel rows forming the battery cell array.

The first side of the cooling tube may contact (e.g., at least partially cover) each battery cell of the first array (e.g., outer surfaces thereof). Optionally, the second side of the cooling tube may contact (e.g., at least partially cover) each battery cell of the second array (e.g., an outer surfaces thereof), for example with the cooling tube being interposed between the first and second arrays of battery cells. Further optionally, the first side of the cooling tube may contact each battery cell of the fourth array and/or the second side of the cooling tube may contact each battery cell of third array (for example with the cooling tube extending in a U-shape therebetween).

In some examples, for some or all of the battery cells, a contact angle along a circumference of the respective battery cell over which the battery cell is in contact with the cooling tube may within a range of 58.5 degrees to 61.5 degrees, in one example within a range of 59.0 degrees and 61.0 degrees. The contact angle may for example be measured relative to a center (e.g., a geometric center or a central axis) of the respective battery cells. The contact angle may for example be the solid angle (e.g., in a plane of the array and/or parallel to the longitudinal direction of the cooling tube) relative to the center of the respective battery cells that is covered by portion of the outer surface of the respective battery cell in contact with or covered by the cooling tube and/or that is defined be the point at which the cooling tube separates from the respective battery cell.

In another aspect of the present disclosure, there is provided a vehicle comprising a battery cell array according to the present disclosure (in accordance with any one of the embodiments/examples disclosed herein).

In any of the above, the plurality of channels may include a first set of channels (e.g., inlet channels) for an inflow of the cooling medium; and a second set of channels (e.g., outlet channels) for an outflow of the cooling medium.

Optionally, the first channel set may include 4 to 6 channels, and/or the second channel set may include 4 to 6 channels.

Optionally, the first channel set may have 5 channels, and/or the second channel set may have 5 channels.

In any of the above, the aspect ratio (e.g., defined by a height and a width of the respective channel) of each of the first channel set and/or the second channel set may be 4 or less.

Optionally, the aspect ratio of each of the first channel set and/or the second channel set may be 3.45.

In any of the above, a wall (e.g., a rib) may be defined between adjacent channels.

Optionally, the wall/rib may have a thickness of 0.4 mm or less.

Optionally, the thickness may be 0.34 mm.

In any of the above, each channel may be defined as a long shape with curved top and bottom ends.

### Advantageous Effects

According to various embodiments as above, it is possible to provide a method for configuring a cooling tube of a battery pack and a cooling tube of a battery pack, which may secure heat transfer performance and minimize pressure loss.

In particular, the present inventors have identified relevant parameter such as the number of channels N , the aspect ratio D of the channels (or, additionally or alternatively, their width and/or height) and the thickness T of the wall(s) separating adjacent channels, that may affect cooling performance (e.g., have a strong correlation therewith), for example due to their potential effect on the pressure drop ΔP across the cooling tube and/or on the amount of deformation δ of the channel(s). Specifically adjusting one or more or all of these parameters (e.g., while leaving other parameters and in particular external dimensions of the cooling tube untouched) thus allows for a simple and easy to implement configuration (e.g., design and/or optimization) of the cooling tube and allows for providing a cooling tube with an optimized design with regard to these parameters and thus cooling efficiency.

Moreover, various other additional effects may be achieved by various embodiments of the present disclosure. Various effects of the present disclosure will be explained in detail in each embodiment, whereas other effects that can be easily understood by those skilled in the art may not be described herein.

### DESCRIPTION OF DRAWINGS

The accompanying drawings illustrate exemplary embodiments of the present disclosure and together with the foregoing disclosure, serve to provide further understanding of the technical features of the present disclosure. Thus, the present disclosure is not to be construed as being limited to the exemplary drawings.
FIG. 1 is a schematic view for illustrating a battery cell array according to an embodiment of the present disclosure.
FIG. 2 is a schematic exploded perspective view for illustrating a battery cell array according to an embodiment of the present disclosure.
FIG. 3 is a schematic drawing for illustrating a cooling tube according to an embodiment of the present disclosure.
FIG. 4 is a schematic plan view showing a battery cell array with battery cells and a cooling tube according to an embodiment of the present disclosure.
FIG. 5 is a schematic drawing for illustrating a battery cell array with battery cells and a cooling tube according to another embodiment of the present disclosure.
FIG. 6 is a schematic drawing for illustrating a battery cell array with battery cells and a cooling tube according to still another embodiment of the present disclosure.
FIG. 7 is a schematic drawing for illustrating a battery cell array with battery cells and a cooling tube according to still another embodiment of the present disclosure.
FIG. 8 is a schematic front view showing a cooling tube according to an embodiment of the present disclosure.
FIG. 9 is a schematic side cross-sectional view showing a cooling tube according to an embodiment of the present disclosure.
FIG. 10 is a schematic drawing for illustrating a manufacturing process of a cooling tube according to an embodiment of the present disclosure through a pressing process.
FIG. 11 is a schematic drawing for illustrating a cross-sectional appearance of a cooling channel after a pressing process according to the number of cooling channels in a cooling tube according to an embodiment of the present disclosure.
FIG. 12 is a drawing for illustrating a differential pressure per unit length according to the number of cooling channels in a cooling tube according to an embodiment of the present disclosure.
FIG. 13 is a drawing for illustrating an expected differential pressure according to the configuration of a battery cell array according to an embodiment of the present disclosure.
FIG. 14 is a schematic drawing for illustrating the cooling channels of a cooling tube according to an embodiment of the present disclosure.
FIG. 15 is a schematic plan view showing a battery cell array for illustrating the arrangement of cooling tubes of the battery cell array according to an embodiment of the present disclosure.
FIG. 16 is an enlarged view of portion E of FIG. 15.
FIG. 17 is a schematic cross-sectional side view showing a battery cell array for explaining the arrangement of the cooling tube in the height direction of the battery cell array according to one embodiment of the present disclosure.
FIG. 18 is an enlarged view showing portion F of FIG. 17.
FIGS. 19 and 20 are schematic drawings for illustrating the contact between a cooling tube and a battery cell when deformation occurs in the cooling channel of the cooling tube according to an embodiment of the present disclosure.
FIG. 21 is a schematic drawing for illustrating a battery cell array according to another embodiment of the present disclosure.
FIG. 22 is a schematic drawing for illustrating a battery cell array according to still another embodiment of the present disclosure.
FIG. 23 is a schematic drawing for illustrating a battery pack according to an embodiment of the present disclosure.
FIG. 24 is a schematic drawing for illustrating a vehicle according to an embodiment of the present disclosure.

### BEST MODE

Hereinafter, exemplary embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just an example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the method, the cooling and/or the battery cell array according to the present disclosure in isolation and separate from the other features and elements of the respective embodiment.

As used herein, the length of the cooling tube (and similarly the longitudinal or length direction) may refer to the largest extent (e.g., largest physical dimension or major axis) of the cooling tube (and the direction or axis of largest extent, respectively), noting that the cooling tube (in addition to being bent, e.g., having alternating convex and concave portions) may not always extend along an (at least substantially) straight line (as, e.g., in FIG. 4 described below) but in some examples may also extend along, e.g., a U-shaped path (e.g., back and forth between adjacent pairs of linear arrays/rows of battery cells, see, e.g., FIG. 5 described below) or a meandering (e.g., zigzag) path (e.g., repeatedly back and forth between a plurality of pairs of linear arrays/rows of battery cells, see, e.g., FIG. 6 described below). In the latter cases, the length of the cooling tube may for example refer to the (e.g., U-shaped or meandering) path or path length along which the cooling tube (primarily) extends (and the orientation of the longitudinal direction may vary depending on the position along the length of the cooling tube).

A thickness or width of the cooling tube (and similarly the thickness or width direction) may for example refer to the smallest extent (e.g., smallest physical dimension or minor axis) of the cooling tube (and to the direction or axis of smallest extent, respectively). A height of the cooling tube (and similarly the height direction) may for example refer to the largest transverse/lateral extent (e.g., largest transverse/lateral physical dimension or major transverse/lateral axis) in a plane perpendicular to the longitudinal direction (and to the direction or axis of largest transverse/lateral extent, respectively) and/or to the extent or direction perpendicular to the length and width directions.

In the drawings, the length/longitudinal direction of the cooling tube may for example (at least in the majority of segments of the cooling tube) coincide with the Y-axis direction, the thickness/width direction (at least in the majority of segments of the cooling tube) coincide with the X-axis direction and the height direction with the Z-axis direction.

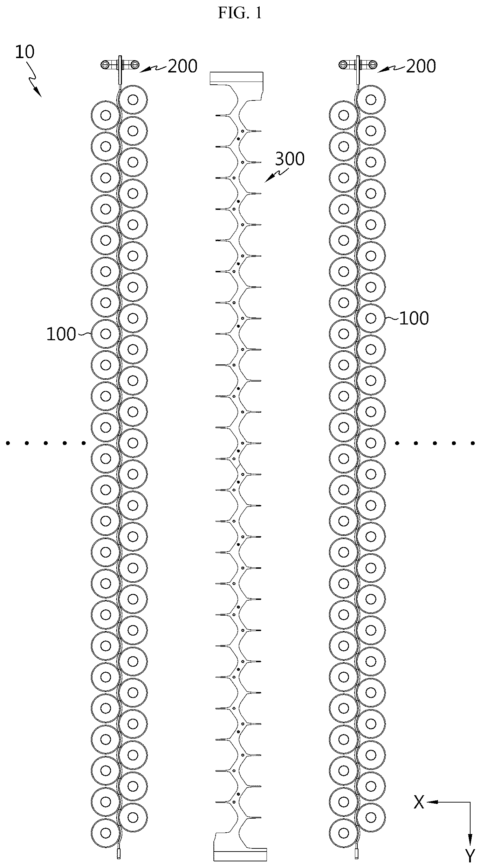

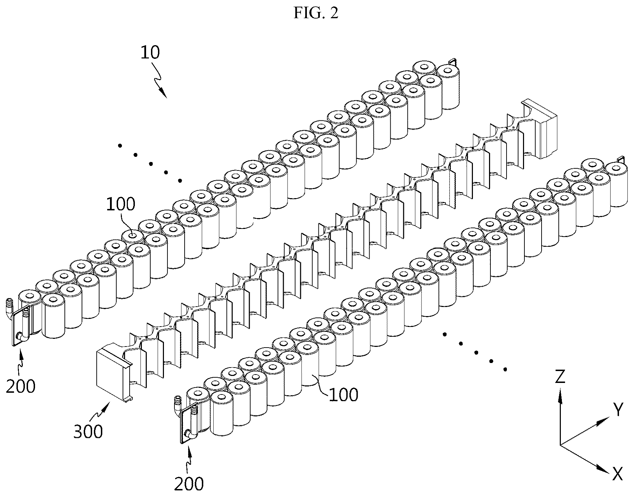

FIG. 1 is a schematic view for illustrating a battery cell array according to an embodiment of the present disclosure. FIG. 2 is a schematic exploded perspective view for illustrating a battery cell array according to an embodiment of the present disclosure such as the battery cell array of FIG. 1.

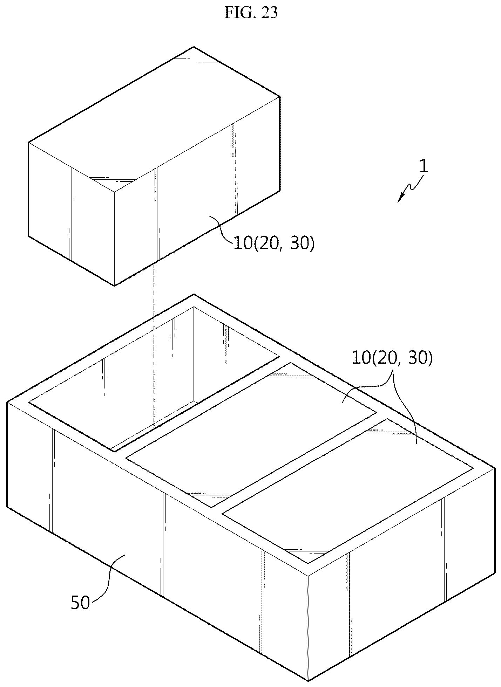

Referring to FIGS. 1 and 2, the battery cell array 10 may include battery cells 100 and a cooling tube 200. The battery cell array 10 may be a component of a battery pack 1 (see FIG. 23) described below. That is, the battery pack 1 (see FIG. 23) described below may include the battery cell array 10.

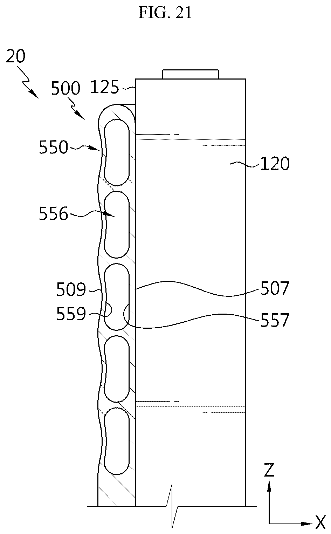

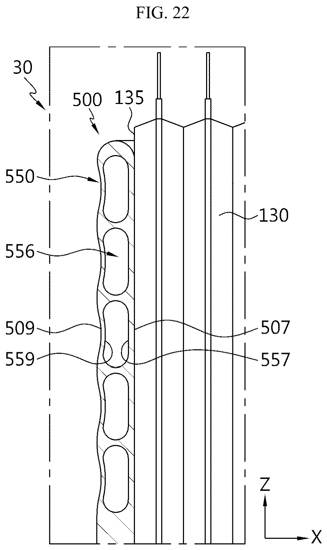

The battery cells 100 may be provided in plurality (i.e., a plurality of battery cells 100, e.g., at least three or four battery cells, preferably at least ten battery cells, in some examples at least twenty and in one example at least 100 battery cells, for example up to 1000 battery cells). The plurality of battery cells 100 are secondary batteries. The plurality of battery cells 100 may for example be provided as cylindrical secondary batteries, prismatic (e.g., square or rectangular) secondary batteries, and/or pouch-type secondary batteries. First, in this embodiment, the battery cells 100 are described as being cylindrical secondary batteries, but may additionally or alternatively also be embodied in other formats such as prismatic and/or pouch-type secondary batteries. Examples where the battery cells 102 are provided as prismatic (e.g., square) secondary batteries (see FIG. 21) or the battery cells 103 are provided as pouch-type secondary batteries (see FIG. 22) will be described in more detail later with reference to the related drawings.

The cooling tube 200 is provided between the plurality of battery cells 100. The cooling tube 200 may be attached to the plurality of battery cells 100, e.g., to improve cooling performance. Accordingly, the cooling tube 200 may have a cell attachment surface on its outer surface that is attached to the plurality of battery cells 100 (e.g., by means of an adhesive provided therebetween).

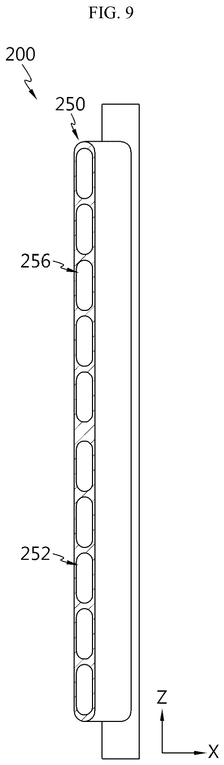

The cooling tube 200 may have a cooling channel 250 (see FIG. 9) for the flow of a cooling medium, explained later. In an embodiment of the present disclosure, the cooling medium is a liquid, and may for example be provided as water. However, the present disclosure is not limited thereto, and the cooling medium may include not only water but more generally (and additionally or alternatively) one or more fluids capable of exchanging heat with the surrounding environment. The cell attachment surface of the cooling channel 250 (see FIG. 9) may be provided as a flat surface (e.g., with little or no deformations from a shape of an outer surface of the battery cells) to maximize the contact area with the battery cells 100.

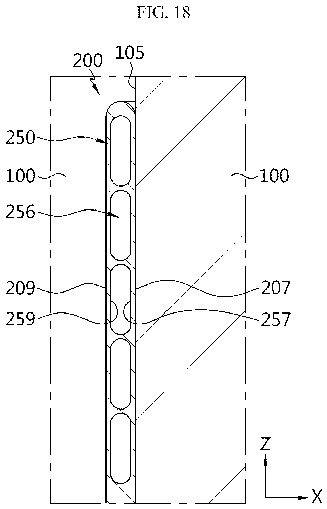

The cooling tube 200 may be provided to have a curvature (e.g., be bent) in the length direction (Y-axis direction) to increase cooling performance with the battery cells 100 provided as the cylindrical secondary battery, for example to fit (e.g., conform to) a shape of an outer surface 105 of the battery cells (see also FIG. 18-20). This may be to increase the contact area between the outer surface 105 of the battery cells 100 provided in a cylindrical shape and the cooling tube 200, thereby increasing cooling performance.

However, in the cooling channel 250 provided in the cooling tube 200, deformation such as an (undesired) bending (e.g., wave- or ripple-like) shape (for example in the height direction, along which, e.g., no bending is supposed to occur, and/or in the length direction, e.g., deviating from the desired curvature/bending) may occur in the cell attachment surface of the cooling tube 200, for example due to a pressing process described below or the like. If deformation such as bending occurs in the cell attachment surface in contact with the outer surface of the battery cells 100, the flatness of the cell attachment surface may decrease, so that the adhesion between the outer surface of the cooling tube 200 and the battery cells 100 may decrease, thereby reducing the contact area. As a result, the heat transfer area may decrease, which may deteriorate the heat transfer performance of the cooling tube 200.

The curved shape due to deformation of the cooling channel 250 may for example be caused during the pressing process for forming the curvature of the cooling tube 200, explained later.

In an embodiment of the present disclosure, the cell attachment surface may be secured as a flat surface even after the pressing process of the cooling tube 200. Thereby, the risk of deformation of the cell attachment surface of the cooling tube 200 may be reduced and the risk of heat transfer deviation occurring inside the cooling channel 250 near the cell attachment surface may be reduced significantly. Therefore, in an embodiment of the present disclosure, the adhesion of the battery cells 100 to the cooling tube 200 may be increased while maximizing the heat transfer area, thereby preventing a decrease in the heat transfer performance of the cooling tube 200.

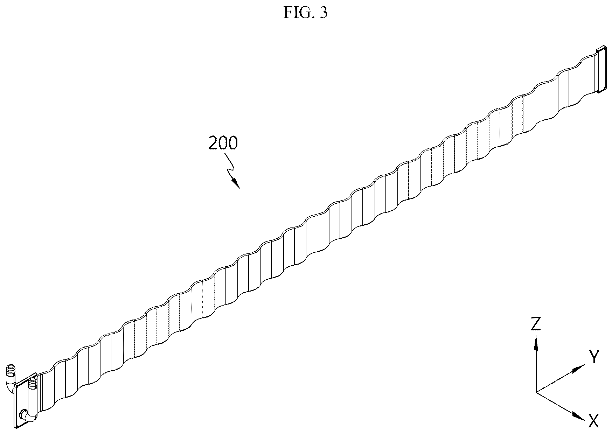

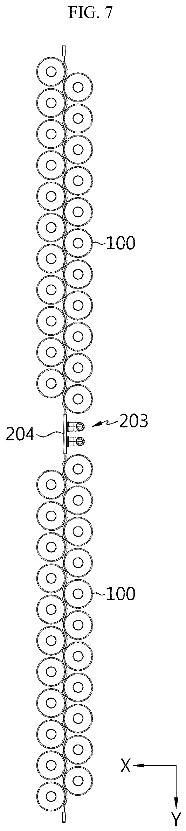

FIG. 3 is a schematic drawing for illustrating a cooling tube according to an embodiment of the present disclosure, FIG. 4 is a schematic plan view showing a battery cell array with battery cells and a cooling tube according to an embodiment of the present disclosure such as the cooling tube of FIG. 3. FIG. 5 is a schematic drawing for illustrating a battery cell array with battery cells and a cooling tube according to another embodiment of the present disclosure. FIG. 6 is a schematic drawing for illustrating a battery cell array with battery cells and a cooling tube according to still another embodiment of the present disclosure and FIG. 7 is a drawing for illustrating a battery cell array with battery cells and a cooling tube according to still another embodiment of the present disclosure.

Referring to FIGS. 3 and 4, the cooling tube 200 may be made of a material with high thermal conductivity (e.g., a thermal conductivity of at least 50 W/m·K, in some examples of at least 100 W/m·K and in some examples of at least 200 W/m·K). For example, the cooling tube 200 may be made of aluminum.

The cooling tube 200 may be formed with a predetermined length. The cooling tube 200 may have a curvature shape in the length direction (Y-axis direction), i.e., be bent in/towards, for example, the width direction / X-axis direction. The curvature shape may be formed by alternating convex portions and concave portions in the length direction (Y-axis direction). The alternating arrangement of the convex portions and the concave portions may mean that one concave portion is arranged between two convex portions, and one convex portion is arranged between two concave portions (along the length direction).

The plurality of battery cells 100 may be arranged in two rows (as an example of first and second arrays) with the cooling tube 200 interposed therebetween in the length direction. The plurality of battery cells 100 may be arranged to be attached to the convex portions and the concave portions. The two rows of battery cells 100 may be configured as a first linear array and a second linear array, each of which includes a plurality of the battery cells 100. A first surface of the cooling tube 200 may be in contact with the first linear array. A second surface of the cooling tube 200 may be in contact with the second linear array. The first and second surfaces of the cooling tube 200 may be opposite to each other (i.e., the first linear array and the second linear array may be arranged on opposite sides of the cooling tube in the thickness direction / X-axis direction, e.g., as illustrated in FIG. 4)

Referring to FIG. 5, the cooling tube 201 may have a shape and structure that accommodates the battery cells 100 arranged in at least four rows (as an example of a first (linear) array, a second (linear) array, a third (linear) array and a fourth (linear) array). For example, the cooling tube 201 may be formed to have a length at least twice that of the cooling tube 200 of FIG. 4 described above. The cooling tube 201 may have a curvature shape in the length direction (Y-axis direction), e.g., as described above for the cooling tube 200. The curvature shape may be formed by alternating convex portions and concave portions in the length direction (Y-axis direction). The cooling tube 201 may be formed to extend by a predetermined length to one side (+Y-axis direction) in the length direction (Y-axis direction), and to be bent at least once at one end (+Y-axis direction) along the length direction (Y-axis direction) and to extend by a predetermined length (e.g., the same predetermined length) in the opposite direction (-Y-axis direction). In this way, the cooling tube 201 according to this embodiment may be formed to be attached to a total of four rows of battery cells 100 by dividing the four rows of battery cells 100 into two sets, each including two rows of battery cells 100. In addition, the cooling tube 201 has a cooling channel 250 (see FIG. 9) similar to the cooling tube 200 described above.

Referring to FIG. 6, the cooling tube 202 may have a multi-bent structure (as an example of a meandering structure/path) with a predetermined length. The cooling tube 202 may have a curvature shape in the length direction (Y-axis direction), e.g., as described above for the cooling tube 200. The curvature shape may be formed by alternating convex portions and concave portions in the length direction (Y-axis direction). As an example of a multi-bent structure, the cooling tube 202 may be formed as a winding snake-like structure capable of covering a plurality of battery cells 100 in three, four or more rows (as examples of linear arrays) through the multi-bent structure that is bent two, three or more times. Through the cooling tube 202 having such a multi-bent structure, it is possible to implement integrated cooling of multiple rows of battery cells 100, thereby reducing the number of cooling tubes 202. Through the cooling tube 202 having such a multi-bent structure, it may also be possible to cool multiple rows of battery cells 100 with one cooling tube 202, depending on the design. Meanwhile, the cooling tube 202 also has a cooling channel 250 (see FIG. 9) similar to the cooling tube 200.

Referring to FIG. 7, the cooling tube 203 may be formed to extend from a cooling medium inlet/outlet portion 204 (which may, e.g., comprise an inlet and an outlet of the cooling tube 203), which may be connected to an external cooling line, etc., by a predetermined length to both sides (+Y-axis direction and -Y-axis direction) in the length direction (Y-axis direction). The cooling tube 203 may be formed to a predetermined length in each direction (+Y-axis direction and -Y-axis direction). The cooling tube 203 may have a curvature shape in the length direction (Y-axis direction), e.g., as described above for the cooling tube 200. The curvature shape may be formed by alternating convex portions and concave portions in the length direction (Y-axis direction).

In this way, the cooling tube 203 may have a bidirectional cooling structure in which the cooling medium inlet/outlet portion 204 is positioned at the center and the cooling tube 203 extends to both sides (+Y-axis direction and -Y-axis direction) in the length direction (Y-axis direction). In the examples of FIGS. 1 to 6, on the other hand, the cooling medium inlet/outlet portion may be positioned at an end of the cooling tube with the cooling tube extending to one side (e.g., + Y axis direction) in the length direction.

Moreover, the cooling tube 203 also has a cooling channel 250 (see FIG. 9) similar to the cooling tube 200.

In these embodiments, in all of the cooling tubes 200, 201, 202, 203 of various structures, the cell attachment surface may be secured as a flat surface according to the design structure described below, thereby reducing the risk of deformation of the cell attachment surface of the cooling tubes 200, 201, 202, 203 and significantly reducing the risk of heat transfer deviation occurring inside the cooling channel 250 near the cell attachment surface.

Therefore, in embodiments of the present disclosure, the heat transfer area may be secured to the maximum while increasing the close contact between the cooling tubes 200, 201, 202, 203 and the battery cells 100, thereby preventing a decrease in the heat transfer performance of the cooling tube 200.

Hereinafter, the shape of the cooling channel 250 according to an embodiment of the present disclosure will be described in more detail, focusing on the cooling tube 200 representatively among the cooling tubes 200, 201, 202, 203. Although the description below is made using the cooling tube 200 for illustration purposes, it is also applicable, without limitation, to the cooling tube according to any other embodiment of the present disclosure and in particular to each of the cooling tubes 201, 202, 203.

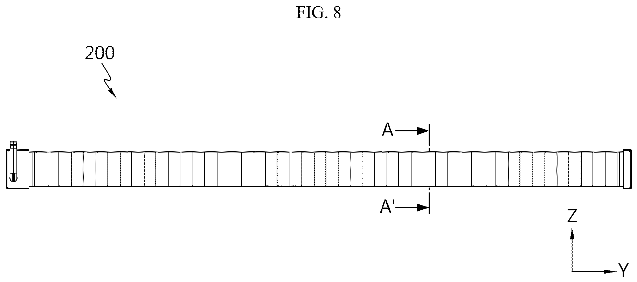

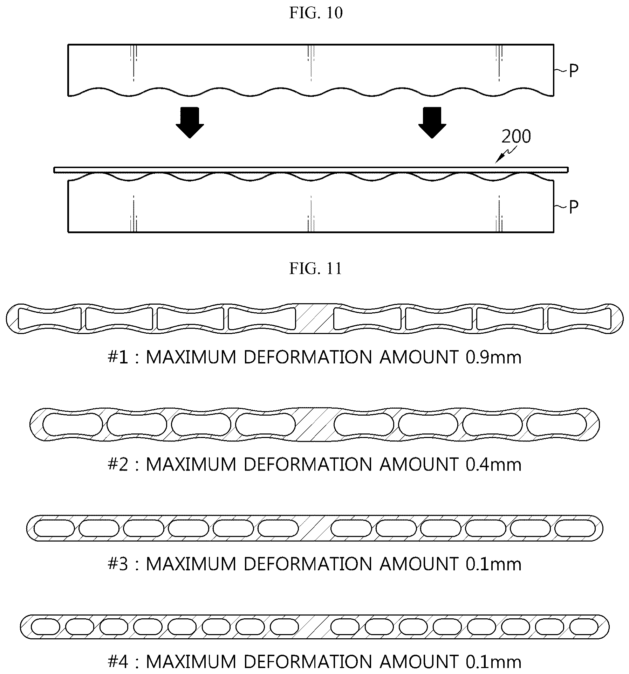

FIG. 8 is a schematic front view (e.g., along the X axis direction of FIG. 3) showing a cooling tube according to an embodiment of the present disclosure such as the cooling tube 200 of FIG. 3. FIG. 9 is a schematic side cross-sectional view (e.g., in the X-Z plane of FIG. 3) showing a cooling tube according to an embodiment of the present disclosure such as the cooling tube 200 of FIG. 3 FIG. 10 is a schematic drawing (e.g., as seen along the Z-axis of FIG. 3) for illustrating a manufacturing process of a cooling tube according to an embodiment of the present disclosure such as the cooling tube 200 of FIG. 3 through a pressing process.

Referring to FIGS. 8 to 10 and the former drawings, the cooling tube 200 may for example be formed into the curvature shape (i.e., be bent) by applying pressure using a press device P (which may, e.g., comprise a pair of inverted dies and/or molds as illustrated in FIG. 10) when manufacturing the cooling tube 200. That is, the cooling tube 200 may be manufactured so that the convex portion and the concave portion are alternately provided by pressing of the press device P. In other words, the cooling tube 200 may be bent by pressing of the press device P. Here, the cooling tube 200 may be bent to fit the shape of at least one of the first linear array and the second linear array of the battery cells 100.

The cooling channel 250 may be provided in a preset plural number (i.e., as a plurality of (cooling) channels 250 with a preset number N of cooling channels 250) that does not cause deformation of the cooling channel 250 when pressurized. The number of cooling channels 250 may be an important design factor related to deformation of the cooling channel 250 when pressurized. In the cooling tube 200, as the number of cooling channels 250 increases, deformation of the cooling channel 250 when pressurized may be reduced. However, there is a problem that as the number of cooling channels 250 increases, the pressure loss of the cooling tube 200 may also increase. If the pressure loss of the cooling tube 200 is large, the output of the pump for circulating the cooling medium toward the cooling channel 250 may have to be increased, which may increase power consumption and/or may lower the overall efficiency of the battery cell array 10.

Therefore, in the cooling tube 200, the number of cooling channels 250 may be set to a preset number N that reduces the pressure loss and does not cause deformation of the cooling channels 250 during the pressing process. In an embodiment of the present disclosure, the cooling channels 250 are provided in 10 units (i.e., ten cooling channels 250 may be provided, N = 10). The ten cooling channels 250 may be arranged at a predetermined distance from each other along the height direction (Z-axis direction) of the cooling tube 200.

The cooling channels 250 may include an inlet channel (or set of inlet channels) 252 and an outlet channel (or set of outlet channels) 256.

The inlet channel 252 may guide the cooling medium supplied from an external cooling device to the cooling tube 200. The inlet channel 252 may be arranged in a lower portion (e.g., with respect to the central axis of the cooling tube 200) in the height direction (Z-axis direction) of the cooling tube 200. The inlet channel 252 may be formed (e.g., extend) along the length direction (Y-axis direction) of the cooling tube 200. and the inlet channel 252 may cause the cooling medium to flow along the length direction (Y-axis direction) in the lower portion of the cooling tube 200.

The inlet channel 252 may be provided in a preset number. In this embodiment, the inlet channel 252 may be provided in plurality (e.g., as a plurality of inlet channels 252 with a preset number of inlet channels 252). Specifically, five inlet channels 252 may be provided in this example. The number of inlet channels 252 may be selected by considering both aspects of reducing pressure loss and not causing deformation during the pressing process as described above. The plurality of inlet channels 252 may be arranged to be spaced apart from each other by a predetermined distance along the height direction (Z-axis direction) of the cooling tube 200.

The plurality of inlet channels 252 may be the first channel set referred to above that allows the introduction of the cooling medium into the cooling tube 200.

The outlet channel 256 is communicated with (e.g., in fluid communication with) the inlet channel 252. The outlet channel 256 may guide the cooling medium flowing in the inlet channel 252 to an external cooling device (e.g., the external cooling device supplying the cooling medium to the inlet channel 252). The outlet channel 256 may be arranged in an upper portion (e.g., based on the central axis of the cooling tube 200) in the height direction (Z-axis direction) of the cooling tube 200. Specifically, the outlet channel 256 may be provided at the upper side of the inlet channel 252 in the height direction (Z-axis direction) of the cooling tube 200. The outlet channel 256 may be formed (e.g., extend) long along the length direction (Y-axis direction) of the cooling tube 200. The outlet channel 256 may allow the cooling medium to flow along the length direction (Y-axis direction) in the upper portion of the cooling tube 200.

The outlet channel 256 may be provided in a preset number. In this embodiment, the outlet channel 256 may be provided in plurality (e.g., as a plurality of outlet channels 256 with a preset number of inlet channels 256). Specifically, five outlet channels 256 may be provided in this example. The number of outlet channels 256 may be selected by considering both aspects of reducing pressure loss and not causing deformation during the pressing process described above. The number of outlet channels 256 may be equal to the number of inlet channels 252 (e.g., N/2). The plurality of outlet channels 256 may be spaced apart from each other by a predetermined distance along the height direction (Z-axis direction) of the cooling tube 200. Consequently, the inlet channels 252 and the outlet channels 256 may respectively be arranged to be spaced apart from each other by a predetermined interval in the height direction (Z-axis direction) of the cooling tube 200.

The plurality of outlet channels 256 may be the second channel set referred to above that allows the cooling medium to flow out from the cooling tube 200.

Meanwhile, the cooling medium may enter the inlet channel 252 through a port of the cooling tube 200 (e.g., through an inlet/inlet port of the cooling tube 200) connected to the external cooling device. The cooling medium may flow along the length direction of the inlet channel 252, The cooling medium may then move to the outlet channel 256 at the side opposite to the port. The cooling medium may then flow along the length direction of the outlet channel 256. The cooling medium may then move back to the external cooling device through the port (e.g., through an outlet/outlet port of the cooling tube 200). This flow path of the cooling medium may be roughly U-shaped (e.g., in the Y-Z plane).

Hereinafter, test results related to the deformation of the cooling channel 250 during the pressing process associated with the number of cooling channels 250 of the cooling tube 200 will be described.

FIG. 11 is a schematic drawing for illustrating a cross-sectional appearance (e.g., in the X-Z plane of FIG. 3) of a cooling channel such as the cooling channel 250 after a pressing process according to the number of cooling channels in a cooling tube according to an embodiment of the present disclosure.

Referring to FIG. 11 and the former drawings, it may be found that as the number of cooling channels 250 increases in the cooling tube 200 from case 1 to case 4, the maximum deformation amount (e.g., a maximum height of the deformations such as a maximum peak-to-valley height/variation) of the cooling channel 250 decreases. Specifically, as in cases 1 and 2, when the number of cooling channels 250 is 8 in total (specifically, 4 inlet channels and 4 outlet channels, respectively), it may be found that the maximum deformation amount of the cooling channel 250 is greater than in cases 3 and 4 where the number of cooling channels 250 is larger than in cases 1 and 2 (e.g., 12 and 16, respectively, in total). Meanwhile, comparing case 1 and case 2, it may be found that even when the number of cooling channels 250 is the same, a difference occurs in the maximum deformation amount depending on the interval between the cooling channels 250 and/or an aspect ratio of the individual cooling channels 250.

Comparing case 3 and case 4, it may be found that the maximum deformation amount of the cooling channels 250 of case 3 (12 cooling channels including 6 inlet channels and 6 outlet channels, respectively) and case 4 (16 cooling channels including 8 inlet channels and 8 outlet channels, respectively) are the same. In this case, it may be preferable to configure the cooling channels like case 3 rather than case 4 to reduce pressure loss. In this way, the number of cooling channels 250 may be set to a preset number that does not cause deformation (or reduces deformation to an acceptable level) while reducing pressure loss.

In the cooling channel 250 according to an embodiment of the present disclosure, considering the above, as described above, a total of 10 channels may be provided, including 5 inlet channels 252 and 5 outlet channels 256, respectively.

Meanwhile, with regard to the deformation of the cooling channel, the pressing speed during the pressing process may not have a significant effect, even at different speeds. In other words, with regard to the flatness of the cell attachment surface of the cooling channel, the pressing speed during the pressing process had a small effect on the flatness.

These results highlight the importance of optimizing the number and arrangement of cooling channels to improve battery performance. Increasing the number of cooling channels may distribute the cooling load more evenly, thereby reducing the maximum deformation that may occur during the pressing process. This may not only improve the structural integrity of the cooling channels but may also enhance the overall thermal management of the battery pack, which may be advantageous for maintaining optimal operating temperatures and extending battery life.

In addition, the minimal effect of pressing speed on the flatness of the cooling channels suggests that manufacturers may focus on other variables, such as material properties and channel design, to minimize deformation. This may lead to the development of more robust cooling systems that are less sensitive to manufacturing process variations, thereby further improving the reliability and consistency of battery pack production. For example, when ten cooling channels including five inlet channels and five outlet channels, respectively, are provided, it is possible to provide an approach to a balanced cooling channel design that maximizes cooling efficiency while minimizing pressure loss and deformation. This configuration may be adjusted to specific applications, ensuring that each battery pack meets the unique performance requirements of various devices ranging from consumer home appliances to high-demand electric vehicles.

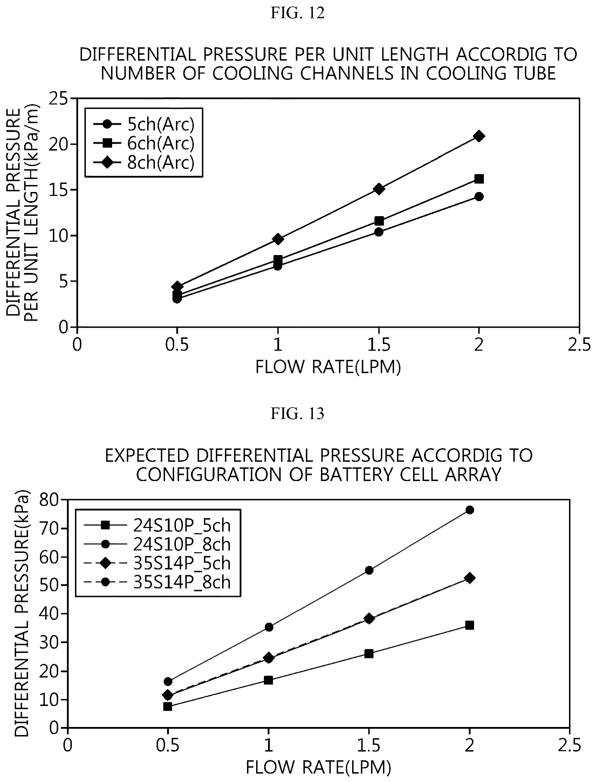

FIG. 12 is a drawing for illustrating a differential pressure per unit length (as an example for a pressure drop ΔP) according to the number of cooling channels in a cooling tube according to an embodiment of the present disclosure, and Table 1 below is a table showing the differential pressure for the flow rate for the number of cooling channels of the cooling tube according to an embodiment of the present disclosure.

**[Table 1]**

| | Differential pressure per unit length | 0.5 | 1 | 1.5 | 2 |
|---|---|---|---|---|---|
| Differential pressure per unit length (kPa/m) | 5ch (Arc) | 3.1 | 6.67 | 10.40 | 14.28 |
| | 6ch (Arc) | 3.41 | 7.38 | 11.59 | 16.19 |
| | 8ch (Arc) | 4.44 | 9.60 | 15.08 | 20.87 |

Referring to FIG. 12 and Table 1, the differential pressure results per unit length according to the number of cooling tube channels (ch) are shown. It may be found that the differential pressure per unit length increases as the flow rate increases, and the differential pressure also increases as the number of cooling channels increases. The test results show that when the cooling channel is configured with 8 channels, the pressure loss increases by approximately 45% compared to when the cooling channel is configured with 5 channels.

Meanwhile, the number of channels in the test of 5 channels (5ch), 6 channels (6ch), and 8 channels (8ch) may refer to the number of inlet channels and outlet channels, respectively, rather than the total number of cooling channels. That is, in the case of 5 channels, it may mean that the cooling tube is configured with 5 inlet channels and 5 outlet channels, namely a total of 10 cooling channels (e.g., as illustrated in FIG. 9). Similarly, in the case of 8 channels, it may mean that the cooling channels are configured with a total of 16 cooling channels (e.g., as illustrated in case #4 of FIG. 11). Ultimately, the test results show that the pressure loss may be reduced by decreasing the number of cooling channels in the cooling tube.

Therefore, the test data shows that the differential pressure increases as the flow rate and number of cooling channels increase. In particular, the pressure loss is approximately 45% higher in 8 channels compared to 5 channels. It is again noted that the number of channels in relation to the test results refers to both the number of inlet and outlet channels, which means that 5 channels correspond to a total of 10 cooling channels. If the number of cooling channels is decreased, the pressure loss may be effectively reduced, thereby increasing the energy-efficient cooling medium flow. While more channels may improve heat dissipation, it may be important to manage the number of channels to avoid excessive pressure loss, which may be relevant in applications such as electric vehicles and hybrid electric vehicles.

These test results highlight the importance of balancing the number and design of cooling channels in order to contribute to the development of better cooling solutions for high-performance battery packs.

FIG. 13 is a drawing for illustrating an expected differential pressure (e.g., pressure drop ΔP across the cooling tube) according to the configuration of a battery cell array according to an embodiment of the present disclosure, and Table 2 below shows the expected differential pressure according to the configuration of the battery cell array according to an embodiment of the present disclosure.

**[Table 2]**

| | Flow rate (LPM) | 0.5 | 1 | 1.5 | 2 |
|---|---|---|---|---|---|
| Differential pressure (kPa) | 24S10P_5ch | 7.8 | 16.8 | 26.2 | 36 |
| | 24S10P_8ch | 11.2 | 24.2 | 38 | 52.6 |
| | 35S14P_5ch | 11.3 | 24.4 | 38.1 | 52.3 |
| | 35S14P_8ch | 16.3 | 35.2 | 55.2 | 76.5 |

Referring to FIG. 13 and Table 2, the expected differential pressure results according to the battery cell array configuration are shown. It may be found that the differential pressure increases as the flow rate increases, and it may be found that the differential pressure increases as the number of battery cells increases. Meanwhile, in FIG. 13 and Table 2, only the flow path length of the cooling channel in the cooling tube is reflected, and the port and the end plate portion connected to the external cooling device are not reflected. Accordingly, for example, in the case of a 24S10P array, the flow path length may be approximately 2520.4 mm (= 2*1260.2 mm), and in the case of a 35S14P array, the flow path length may be approximately 3663.3 mm (= 2*1831.7 mm).

The test results show that the differential pressure of the 8-channel configuration of the 24S10P array (24S10P_8ch) and the 5-channel configuration of the 35S14P (35S14P_5ch) array are almost the same. In other words, when the cooling channels of the cooling tube are configured as 5 channels (5 inlet channels and 5 outlet channels, a total of 10 channels), more battery cells may be attached to the cooling tube. In other words, the cooling tube may be made longer, for example approximately 45% longer.

In this way, when the number of cooling channels of the cooling tube is configured as 5 channels for inlet channels and outlet channels, respectively, a cooling tube that may relatively freely configure the battery cell array while allowing more battery cells to be attached may be designed.

Therefore, FIG. 13 and Table 2 show that the differential pressure increases according to the flow rate and the number of battery cells. For example, the length of the cooling channel of the 24S10P array is approximately 2520.4 mm, while the length of the cooling channel of the 35S14P array is approximately 3663.3 mm. Although the length of the 35S14P array is longer, the differential pressure is similar between the 8-channel configuration of the 24S10P array and the 5-channel configuration of the 35S14P array. This indicates that the 5-channel configuration (5 inlet channels and 5 outlet channels, a total of 10 channels) allows for more battery cells and longer cooling tubes to be used approximately 45% longer (e.g., to achieve the same differential pressure/pressure drop ΔP). This design may not only accommodate more battery cells but may also provide flexibility in battery cell array configuration, which may improve thermal management and overall performance.

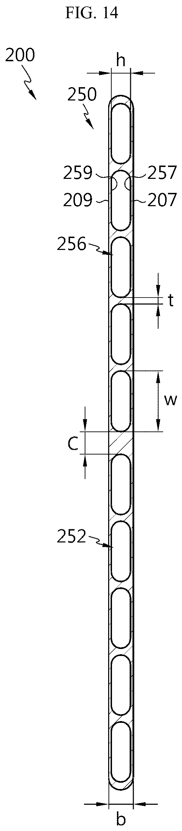

FIG. 14 is a schematic drawing (e.g., as seen along the Y-axis direction of FIG. 3) for illustrating the cooling channels of a cooling tube according to an embodiment of the present disclosure, which may for example be applied to any of the cooling tubes 200, 201, 202 and 204 of FIGS. 3 to 7. Table 3 below is a table for explaining the number of channels and the shape information of the cooling channel of the cooling tube of FIG. 14. Table 4 below is a table for explaining the simulation results according to the number of channels and the shape of the cooling channel according to an embodiment of the present disclosure. Table 5 below is a table for explaining the influence analysis (e.g., correlation analysis) according to the simulation results of Table 4.

**[Table 3]**

| Dimension item | t | w | h | Number | Shape |
|---|---|---|---|---|---|
| | 0.34 | 6.08 | 1.76 | 5 | round |

**[Table 4]**

| No. | t | w | h | Differential pressure (kPa) | Deformation amount |
|---|---|---|---|---|---|
| 1 | 0.34 | 6.08 | 1.8 | 5.71 | 0.409 |
| 2 | 0.34 | 6.08 | 1.78 | 5.89 | 0.391 |
| 3 | 0.34 | 6.08 | 1.76 | 6.08 | 0.374 |
| 4 | 0.39 | 6.04 | 1.8 | 5.76 | 0.422 |
| 5 | 0.39 | 6.04 | 1.78 | 5.94 | 0.405 |
| 6 | 0.39 | 6.04 | 1.76 | 6.12 | 0.388 |
| 7 | 0.44 | 6 | 1.8 | 5.8 | 0.429 |
| 8 | 0.44 | 6 | 1.78 | 5.98 | 0.413 |
| 9 | 0.44 | 6 | 1.76 | 6.17 | 0.397 |
| 10 | 0.49 | 5.96 | 1.8 | 5.85 | 0.434 |
| 11 | 0.49 | 5.96 | 1.78 | 6.03 | 0.418 |
| 12 | 0.49 | 5.96 | 1.76 | 6.23 | 0.401 |
| 13 | 0.54 | 5.92 | 1.8 | 5.9 | 0.436 |
| 14 | 0.54 | 5.92 | 1.78 | 6.09 | 0.421 |
| 15 | 0.59 | 5.88 | 1.8 | 5.95 | 0.437 |
| 16 | 0.59 | 5.88 | 1.78 | 6.14 | 0.422 |
| 17 | 0.64 | 5.84 | 1.8 | 6 | 0.437 |
| 18 | 0.64 | 5.84 | 1.78 | 6.19 | 0.421 |
| 19 | 0.69 | 5.8 | 1.8 | 6.06 | 0.435 |
| 20 | 0.69 | 5.8 | 1.78 | 6.24 | 0.419 |
| 21 | 0.74 | 5.76 | 1.8 | 6.11 | 0.433 |
| 22 | 0.79 | 5.72 | 1.8 | 6.16 | 0.430 |
| 23 | 0.84 | 5.68 | 1.8 | 6.22 | 0.426 |

**[Table 5]**

| | t | W | h | Differential pressure (kPa) | Deformation amount |
|---|---|---|---|---|---|
| t | 1.000 | | | | |
| w | -1.000 | 1.000 | | | |
| h | 0.438 | -0.438 | 1.000 | | |
| Differential pressure (kPa) | 0.573 | -0.573 | -0.485 | 1.000 | |
| Deformation amount | 0.658 | -0.658 | 0.836 | -0.134 | 1.000 |

Referring to FIG. 14 and Tables 3 to 5, as described above, it may be desired that deformation of the cell attachment surface 207 of the cooling channel 250 of the cooling tube 200 does not occur, for example during the aforementioned pressing process of the cooling tube 200. It may be desired to prevent deformation of the cell attachment surface 207 of the cooling tube 200 because it may reduce the contact area of the cell attachment surface 207 with the battery cells 100 and may thus reduce the heat transfer area and may lower the overall cooling performance. Therefore, it may be desired to design the cell attachment surface 207 of the cooling tube 200 as a flat surface without (or with as little as possible) deformation (e.g., from a desired bent shape and/or from a shape of an outer surface of the battery cells) even during the pressing process.

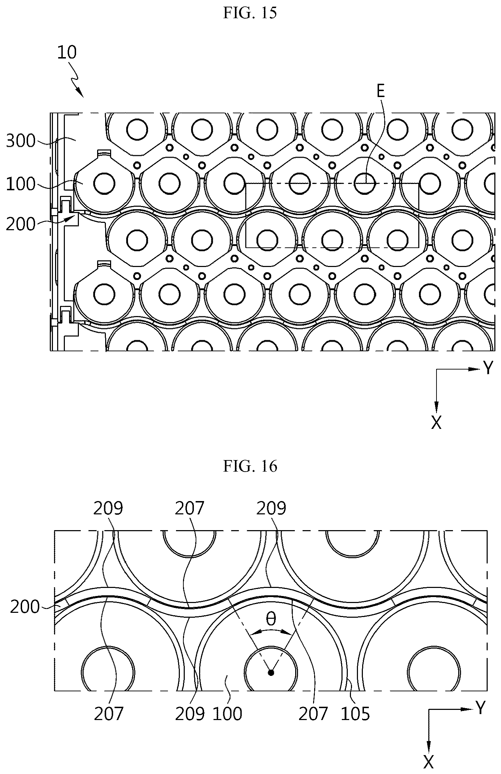

During the pressing process (see FIG. 10), a cell attachment surface 207 (e.g., in the aforementioned concave portions, see for example FIG. 16) may be pressed concavely and may be relatively compressed (e.g., as compared to the cell non-attachment surface 209 described below and/or as compared to its initial length), so that deformation may be small. A cell non-attachment surface 209 (e.g., in the aforementioned convex portions/between adjacent concave portions, see for example FIG. 16) may be pressed convexly during the pressing process and may be relatively elongated compared to the cell attachment surface 207, so that deformation may occur more. According to the concave and convex shapes, during the pressing process, deformation of the cooling channel 250 provided in a hollow shape within the cooling tube 200 between the cell attachment surface 207 and the cell non-attachment surface 209 may be highly likely to occur. Since the cooling channel 250 is provided in a hollow shape for an internal flow path within the cooling tube 200, deformation of the cooling channel 250 in a hollow shape may be highly likely to occur during the pressing process.

When the cooling channel 250 is deformed, the outer surfaces 207, 209 of the cooling tube 200, which are outer sides of the cooling channel 250, may also be deformed. For example, when deformation occurs (e.g., as illustrated in FIG. 11), such as when the cooling channel 250 is depressed to a predetermined depth, the outer surfaces 207, 209 of the cooling tube 200, namely the cell attachment surface 207 and the cell non-attachment surface 209 of the cooling tube 200, may also be depressed to a predetermined depth, e.g., by an amount equal to the deformation amount of the cooling channel 250. Conversely, during the pressing process, deformation may occur on the inner surfaces 257, 259 of the cooling tube 200 due to deformation of the cell attachment surface 207 and the cell non-attachment surface 209.

Here, in particular, deformation of the cell attachment surface 207 may reduce the contact area with the battery cells 100, which may lower heat transfer performance and act as a factor in lowering cooling performance.

Meanwhile, relatively, the opposite surface 209 of the cell attachment surface 207 of the cooling tube 200 in the cooling channel 250 may be unrelated to the heat transfer performance (e.g., since the surface 209 is arranged between, and not in contact with, adjacent battery cells 100) , so it may be relatively less relevant whether the opposite surface 209 of the cell attachment surface 207 of the cooling tube 200 undergoes deformation.

Therefore, it may be desired to design a cooling channel 250 that may minimize deformation of the cell attachment surface 207 in the cooling tube 200 while also reducing pressure loss.

First, as described above (e.g., in relation to FIG. 9), a total of 10 cooling channels 250 may be provided, including 5 inlet channels 252 and 5 outlet channels 256. In an embodiment of the present disclosure, the thickness (b) of the cooling tube 200 (e.g., as measured in the thickness / X-axis direction, for example between the cell attachment surface 207 and the cell non-attachment surface 209) may be between 2.0 mm and 3.0 mm, e.g., 2.5 mm in the simulations of Table 4. Additionally or alternatively, the interval (distance) (c) between the inlet tube/channel 252 and the outlet tube/channel 256, which are arranged closest to each other in the height direction (Z-axis direction) of the cooling tube 200 (i.e., the distance between the first and second sets of channels), may be between 3 mm and 5 mm, e.g., 4 mm in the simulations of Table 4. In the simulation, the thickness (b) of the cooling tube 200 and the interval (c) between the inlet tube 252 and the outlet tube 256, which are arranged closest to each other, may be fixed dimensions. Meanwhile, the compression distance through the pressing process (e.g., the depth of the concave portions) may be between 4 mm and 8 mm, for example 6.44 mm (initially 2.50 mm) in the simulations of Table 4. The preset differential pressure allowable range (e.g., the maximum allowable or desired differential pressure/pressure drop ΔP across the cooling tube) may be between 5 kPa and 7.5 kPa, for example approximately 6.25 kPa in the simulations of Table 4.

The dimension item t may refer to a predetermined interval (distance) between the cooling channels 250 in the height direction (Z-axis direction) of the cooling tube 200. Specifically, the dimension item t may refer to a predetermined interval (distance) between the inlet channels 252 spaced apart from each other in the height direction of the cooling tube 200 and/or to a predetermined interval (distance) between the outlet channels 256 spaced apart from each other in the height direction of the cooling tube 200 (wherein said predetermined distances may be the same for the inlet and outlet channels 252, 256 and may constitute an example of a thickness T of a wall between/separating adjacent channels as referred to above). The dimension item w may refer to a length (height) in the height direction of the cooling tube 200. Specifically, it may refer to a length/height (w) of each inlet channel 252 and/or to a length (w) of each outlet channel 256 in the height direction of the cooling tube 200. The dimension item h may refer to a width of the cooling channel 250 in the thickness (b) direction (X-axis direction) of the cooling tube 200. Specifically, it may refer to a width (h) of the cooling channel 250 in the stacking direction (X-axis direction) of the battery cells 100 (see FIG. 1), for example to a width of each inlet channel 252 and/or to a width of each outlet channel 256.

Referring to Table 4, it may be found that as the dimension item h (the width of the cooling channel 250 in the thickness (b) direction of the cooling tube 200) becomes smaller, the deformation amount becomes smaller. For example, as shown in rows No. 1 to No. 3, it may be found that as the dimension item h becomes smaller to 1.8 mm, 1.78 mm, and 1.76 mm, the deformation amount also becomes smaller to 0.409, 0.391, and 0.374, in that order. In addition, as shown in rows No. 4 to No. 6, it may be found that as the dimension item h becomes smaller to 1.8 mm, 1.78 mm, and 1.76 mm, the deformation amount also becomes smaller to 0.422, 0.405, and 0.388, in that order. As the dimension item t (a predetermined interval between the inlet channels 252 and between the outlet channels 256 spaced apart from each other in the height direction of the cooling tube 200) increases, the deformation amount increases. In addition, as the dimension item w (the length/height of each inlet channel 252 and each outlet channel 256 in the height direction of the cooling tube 200) decreases, the deformation amount increases. In summary, it may be found that the result with the smallest deformation amount within the differential pressure allowable range (6.25 kPa) is case 3 of the simulation result according to row No. 3.

Referring to Table 5, the influence according to these dimension items (e.g., the correlation between these parameters) is analyzed as follows. First, in the table, as being closer to 1, it means that the influence between the two factors is high. It may be found that the absolute values of the differences between the positive and negative values of the dimension item t (a predetermined interval between the cooling channels 250 in the height direction of the cooling tube 200) and the dimension item w (a length/height of each inlet channel 252 and each outlet channel 256 in the height direction of the cooling tube 200) are the same. This may mean that the absolute values of the influences are the same (put differently, the total height of the cooling tube 200 in the height/Z-axis direction may be maintained in the simulations of Table 4 by reducing the length/height w by a corresponding amount to the one by which the interval t is increased and vice-versa). As shown in the table, the factors that mainly have a large influence on the difference in deformation amount are the dimension item t (a predetermined interval between the cooling channels 250 in the height direction of the cooling tube 200, constituting a particular example of a thickness T of a wall between/separating adjacent channels as referred to above) and the dimension item h, and it may be found that the dimension item h has a relatively higher influence than the dimension item t.

In this way, the cooling channel 250 may preferably have a length/height (w) of 5.6 mm to 6.1 mm in the height direction of the cooling tube 200. Specifically, in the height direction of the cooling tube 200, each cooling channel 250 may have a length/height of 6.08 mm in the height direction of the cooling tube. More specifically, in the height direction of the cooling tube 200, the length (w) of each inlet channel 252 and each outlet channel 256 may each be 6.08 mm.

In addition, the predetermined interval (t) between the cooling channels 250 in the height direction of the cooling tube 200 may be 0.3 mm to 0.9 mm. Specifically, the predetermined interval (t) may be 0.34 mm in the height direction of the cooling tube 200. More specifically, the predetermined interval (t) between the inlet channels 252 and the predetermined interval (t) between the outlet channels 256 in the height direction of the cooling tube 200 may each be 0.34 mm.

Meanwhile, a rib (as an example of a wall between adjacent channels) may be defined between adjacent channels in the cooling channels 250. For example, the thickness of the rib may be 0.4 mm or less. Preferably, the thickness may be 0.34 mm. That is, the rib may be a portion corresponding to the predetermined interval (t) between the cooling channels 250, and the thickness of each rib may be the minimum distance between adjacent channels.

The width (h) of the cooling channel 250 in the thickness (b) direction of the cooling tube 200 may be 1.7 mm to 1.8 mm. Specifically, the width (h) of the cooling channel 250 may be 1.7 mm to 1.8 mm in the stacking direction (X-axis direction) of the battery cells 100 (see FIG. 1). More specifically, the width (h) of the cooling channel 250 may be 1.76 mm in the stacking direction of the battery cells 100.

In addition, the cooling channel 250 may have a round-shaped end in the height direction of the cooling tube 200 (e.g., so as to have an elongate (transverse) cross-section with curved (e.g., rounded and/or arcuate) ends as illustrated in FIG. 14). The cooling channel 250 may be defined as an elongated shape with curved top and bottom ends.

As described above, the cooling channels 250 according to an embodiment of the present disclosure as shown in Table 3 may be formed to have a round end in the height direction of the cooling tube 200, to have an interval (t) of 0.34 mm therebetween in the height direction of the cooling tube 200, to have a length/height (w) of 6.08 mm in the height direction of the cooling tube 200, and to have a thickness (h) of 1.76 mm in the thickness direction (b).

In one embodiment of the present disclosure, it is possible to provide a cooling tube 200 that may minimize deformation of the cell attachment surface and the cooling channel near the cell attachment surface while also significantly reducing pressure loss through cooling channels 250 provided with the above shape, size, and number.

Therefore, in an embodiment of the present disclosure, the energy consumption for cooling the battery cells 100 may be reduced through the cooling tube 200 that may secure heat transfer performance while minimizing the pressure loss, resulting in more efficient operation of the entire system.

Referring again to FIGS. 1 and 2, the battery cell array 10 may include a side structure unit 300.

The side structure unit 300 may support the battery cells 100 and may secure the rigidity of the battery cells 100. The side structure unit 300 may be formed to have a predetermined length along the length direction of the battery cell array 10. The side structure unit 300 may be provided in plurality (i.e., as a plurality of side structure units 300). The plurality of side structure units 300 may be assembled with each other to accommodate and support the battery cells 100.

The battery cell array 10 according to an embodiment of the present disclosure may form a cell array structure through the battery cells 100, the cooling tube 200, and the side structure unit 300. The side structure unit 300 forming the cell array structure may guide the battery cell array 10 to be configured without a separate cover structure such as a conventional module frame, thereby implementing a so-called module-frameless structure (e.g., a module-less battery pack). Thus, the battery cell array 10 may be slimmer and its energy density may be increased.

Referring to FIG. 14 and Tables 3 to 5 again, it is shown that maintaining a flat cell attachment surface 207 during the pressing process may be relevant to ensure optimal cooling performance. Deformation may reduce the contact area with the battery cell, which may reduce heat transfer efficiency. Specifically, the hollow shape of the cooling channel 250 may make it susceptible to deformation during pressing, which may affect the external surfaces 207, 209 of the cooling tube 200. To minimize this deformation and reduce pressure loss, the design of the cooling channel may be relevant. A configuration having five inlet channels and five outlet channels (ten channels in total) and specific dimensions, such as a tube thickness of 2.5 mm, an interval between adjacent tubes of 4 mm, and a compression distance of 6.44 mm, may help achieve this. Optimal dimensions for minimal deformation include a cooling channel width (h) of 1.76 mm, a length/height (w) of 6.08 mm, and an interval (t) of 0.34 mm.

Simulations disclosed in this embodiment show that reducing the width (h) may reduce deformation, and that the interval (t) between the channels may significantly influence deformation. These design parameters may ensure that the cooling tube maintains structural integrity and efficient thermal management.

In the battery cell array 10, the side structure unit 300 may support the battery cells and enhance their rigidity. This design may form a cell array structure without a separate module frame, thereby slimming down the battery cell array and increasing its energy density. The design of the cooling tube 200 may minimize pressure loss and energy consumption for cooling, thereby promoting more efficient battery operation.

FIG. 15 is a schematic plan view showing a battery cell array for illustrating the arrangement of cooling tubes of the battery cell array according to an embodiment of the present disclosure, and FIG. 16 is an enlarged view of portion E of FIG. 15.

Referring to FIGS. 15 and 16, in the battery cell array 10, the cooling tubes 200 may be arranged between the battery cells 100. The battery cells 100 may be arranged in two rows (as examples of first and second linear arrays), respectively (e.g., two rows of battery cells 100 between each pair of adjacent side structure units 300 as illustrated in FIG. 15). Each cooling tube 200 may include a cell attachment surface 207 that is formed concavely and is attached to the outer surface 105 of the battery cell 100 (e.g., a respective cell attachment surface 207 for each of the battery cells 100 between which the cooling tube 200 is arranged). Each cooling tube 200 may include a cell non-attachment surface 209 that is not attached to the outer surface of the battery cell 100 and is formed convexly (e.g., a respective cell non-attachment surface 209 opposite to each cell attachment surface 207).

The cell attachment surfaces 207 and the cell non-attachment surfaces 209 may be alternately formed along the length direction (Y-axis direction) of the cooling tube 200 based on (e.g., at) one side (first side/+X-axis direction) or the other side (second side/-X-axis direction) of the cooling tube 200. The cell attachment surfaces 207 and the cell non-attachment surfaces 209 may be formed at zigzag positions along the length direction (Y-axis direction) of the cooling channel 200 based on (e.g., at) both sides (X-axis direction) of the cooling tube 200. That is, if one side (first side/+X-axis direction) in the thickness direction (X-axis direction) of the cooling tube 200 is the cell attachment surface 207, the other side (second side/-X-axis direction) opposite to the one side (first side/+X-axis direction) may be the cell non-attachment surface 209.

The contact angle (θ) between the battery cells 100 and the cooling tube 200 (for example the azimuthal angle along a circumference of the respective battery cell 100 over which the battery cell 100 is in contact with the cooling tube 200, e.g., as illustrated in FIG. 16) may be set to approximately 60 degrees or thereabouts. The reason why the contact angle (θ) is set to approximately 60 degrees is that if the contact angle (θ) is greater than 60 degrees, the cooling performance may improve, but there may be a problem that the size of the entire battery pack 1 may increase as the interval between the battery cells 100 increases. In addition, as the contact angle increases, the degree of curvature of the cooling tube 200 may increase. Therefore, if the contact angle (θ) is much greater than 60 degrees, the hydraulic pressure may increase and the cooling flow may not be smooth. In addition, if the contact angle (θ) is less than 60 degrees, the cooling area of the battery cells 100 in contact with the cooling tubes 200 may decrease, which may decrease cooling efficiency.

Therefore, considering this, it is desirable that the contact angle (θ) is arranged within a range of approximately +/- 1.5 degrees with respect to 60 degrees. For example, the contact angle (θ) may be arranged within a range of 58.5 degrees to 61.5 degrees.

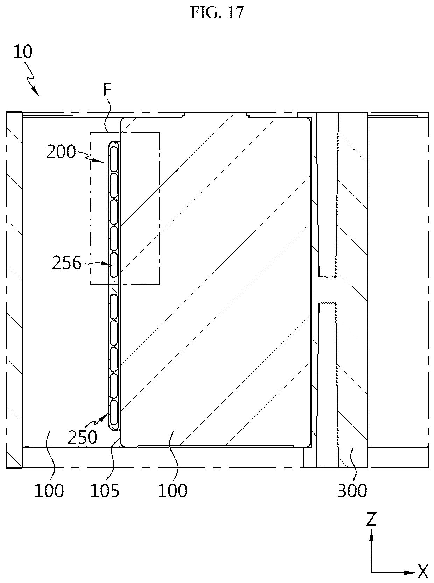

FIG. 17 is a schematic cross-sectional side view showing a battery cell array for explaining the arrangement of the cooling tube in the height direction of the battery cell array according to one embodiment of the present disclosure. FIG. 18 is an enlarged view showing portion F of FIG. 17.

Referring to FIGS. 17 and 18 along with FIGS. 15 and 16 above, in the battery cell array 10, the cooling tube 200 may secure the cell attachment surface 257 as a flat surface according to the design of the cooling channel 250 described above. The close contact between the cell attachment surface 207 and the outer surface 105 of the battery cells 100 may be increased. An internal flow path near the cell attachment surface 207 within the cooling channel 250 without bends may be formed. Thereby, heat transfer performance may be maximized.

Meanwhile, the outer surface 105 of the battery cell 100 and the cell attachment surface 207 of the cooling tube 200 may be closely fixed to each other using an adhesive. The adhesive may be, for example, a resin adhesive. Additionally or alternatively, a heat transfer pad having high adhesive strength may be provided between the outer surface 105 of the battery cell 100 and the cell attachment surface 207 of the cooling tube 200. Further additionally or alternatively, a filler member made of a resin material may also be filled between the outer surface 105 of the battery cell 100 and the cell attachment surface 207 of the cooling tube 200 to form adhesive strength.

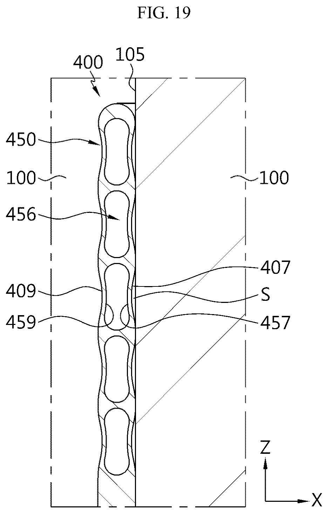

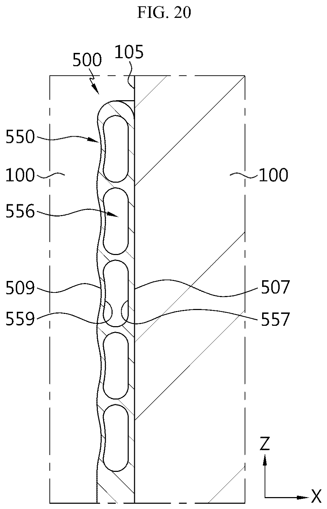

FIGS. 19 and 20 are drawings for illustrating the contact between a cooling tube and a battery cell when deformation occurs in the cooling channel of the cooling tube according to an embodiment of the present disclosure.

Referring to FIG. 19, when deformation of the cooling tube 400 occurs due to deformation of the cooling channel 450 of the cooling tube 400, a space (e.g., predetermined space) S may be generated between the cell attachment surface 407 of the cooling tube 400 and the outer surface 105 of the battery cell 100. The space S may mean a non-contact space between the cooling tube 400 and the battery cell 100. A height of deformations of the cell attachment surface 407 may determine (e.g., be equal to) a thickness/width of the spaces S (e.g., in the thickness / X-axis direction).

If the space S is generated, the heat transfer performance of the cooling tube 400 may decrease by the amount of reduced contact area. As described above, the space S may be caused by deformation of the cooling channel 450, particularly deformation of the cooling channel 450 disposed near the cell attachment surface 407 of the cooling tube 400, for example during the pressing process of the cooling tube 400. In this way, the deformation of the cooling channel 450 disposed near the cell attachment surface 407 and the deformation of the cell attachment surface 407 of the cooling tube 400 caused thereby may cause a deterioration in the cooling performance of the cooling tube 400.

Referring to FIG. 20, the cooling tube 500 according to this embodiment may be formed to have a flat surface (non-deformed surface) only on the cell attachment surface 507 and the inner surface 557 close to the cell attachment surface 507. The cooling tube 500 may be formed to have a curvature (e.g., predetermined curvature), for example an (unintentionally) deformed surface, on the cell non-attachment surface 509 and the inner surface 559 relatively far from the cell attachment surface 507. In other words, in this embodiment, the cell attachment surface 507 and the inner surface 557 of the cooling channel 550 close thereto may have a flat surface, and the cell non-attachment surface 509 and the inner surface 559 of the cooling channel 550 close thereto may have a non-flat surface. That is, the cell non-attachment surface 509, which is provided on the opposite side of the cell attachment surface 507 of the cooling tube 500 and does not come into contact with the outer surface 105 of the battery cells 100, may be provided as a non-flat surface with greater deformation than the flat surface of the cell attachment surface 507 (e.g., having a greater height of deformations).

As described above, the cell attachment surface 507 may be concavely pressed during the pressing process (see FIG. 5) and may be relatively compressed (e.g., as compared to the cell non-attachment surface 509), so that deformation may be small. The cell non-attachment surface 509 may be convexly pressed during the pressing process (see FIG. 10) and may be relatively elongated compared to the cell attachment surface 207, so that deformation may occur more. In this embodiment, the cell attachment surface 507 that is in contact with the outer surface 105 of the battery cells 100 may be formed as a flat surface. The cell non-attachment surface 507 that is not in contact with the outer surface 105 of the battery cells 100 may be formed as a non-flat surface that has a greater degree of deformation (e.g., a greater height of deformations) than the cell attachment surface 507, which may be the flat surface.

The cell attachment surface 507 having the flat surface and the cell non-attachment surface 509 having the non-flat surface may be alternately formed along the length direction (Y-axis direction, see FIG. 15) of the cooling tube 500 based on one side (+X-axis direction) or the other side (-X-axis direction) of the cooling tube 500. The cell attachment surface 507 and the cell non-attachment surface 509 may be formed at zigzag positions along the length direction (Y-axis direction, see FIG. 15) of the cooling channel 500 based on (e.g., at) both sides (X-axis direction) of the cooling tube 500. That is, in this embodiment, the flat surface and the non-flat surface may be alternately formed along the length direction (Y-axis direction, see FIG. 15) of the cooling tube 500 based on one side (first side/+X-axis direction) or the other side (second side/-X-axis direction) of the cooling tube 500, and may be formed at zigzag positions along the length direction (Y-axis direction, see FIG. 15) of the cooling channel 500 based on (e.g., at) both sides (X-axis direction) of the cooling tube 500.

Since the cell non-attachment surface 509 formed as the non-flat surface does not come into contact with the battery cells 100, unlike the cell attachment surface 507, its flatness may be relatively less relevant. Therefore, as in this embodiment, the cooling channel 550 may be designed by considering only deformation prevention of the cell attachment surface 507 and the cooling channel 550 near the cell attachment surface 507 so as to secure the flatness near the cell attachment surface 507. In this way, in this embodiment, even if the cell non-attachment surface 509 that does not come into contact with the battery cells 100 is formed as a non-flat surface, the cell attachment surface 507 that comes into contact with the outer surface 105 of the battery cells 100 is formed as a flat surface, so that the contact performance between the battery cells 100 and the cooling tube 500 may be secured. Therefore, in this embodiment, the cooling tube 500 may be designed by considering only the flatness of the attachment surface with the battery cells 100 during the pressing process of the cooling tube 500, thereby securing relatively more freedom in the design of the cooling tube 500.

In one embodiment, a method for configuring a cooling tube used in a battery pack may be provided, e.g., with the goal of optimizing cooling efficiency by minimizing pressure loss and deformation. This method may begin by extending a cooling tube, which is designed to be characterized by length, width, and height dimensions, along its entire length, e.g., to facilitate the flow of a cooling medium, thereby for example ensuring a uniform cooling distribution. The next step may be to change both the number of channels (N) and the aspect ratio (D) of each channel (e.g., experimentally and/or theoretically/by simulation). The aspect ratio D may be related to the geometric ratio of the channels, which may directly affect the flow dynamics and heat transfer capability of the cooling system. A part of the method may be to determine the pressure drop ΔP of the entire cooling tube for the change in each of the number of channels N and the aspect ratio D (e.g., as a function of both N and D). This pressure drop ΔP may be calculated using the mathematical formula ΔP = f(N, D, L, T), where L is the length of the cooling tube and T is the thickness of the wall/rib separating adjacent channels. This evaluation may be advantageous to understand the influence of various configurations on the resistance to the cooling medium flow, which may be relevant for maintaining efficient cooling performance. The method may also include the step of determining the deformation δ of each channel when the cooling tube is bent to fit the battery array of the battery pack, e.g., again as a function of both N and D. Here, the deformation δ may be evaluated using the mathematical formula δ = f(N, D, T).

This analysis may ensure that the cooling tube maintains its structural integrity (e.g., entireness) and/or that the contact area necessary for effective cooling is not damaged. In addition, the method may include the step of determining the optimal relationship between factors such as the number of channels N, the aspect ratio D, and the rib thickness T with respect to the pressure drop ΔP and the deformation δ. The goal of this method may be to maximize the cooling efficiency of the defined cooling tube by minimizing both pressure loss and deformation, e.g., so that the cooling system may operate effectively under various thermal loads and mechanical stresses. By systematically analyzing and adjusting these parameters, this method may provide a way for designing a cooling tube that provides improved performance for a battery pack, especially in applications where efficient thermal management is important.

FIG. 21 is a schematic drawing for illustrating a battery cell array according to another embodiment of the present disclosure.

Since the battery cell array 20 according to this embodiment is similar to the battery cell array 10 of the former embodiment, features that are substantially identical or similar to the former embodiment will not be described again and features different from the former embodiment will be described in detail.

Referring to FIG. 21, the battery cell array 20 may include the cooling tube 500 and battery cells 120.

The battery cell 120 may be provided as a prismatic (e.g., square) secondary battery. One battery cell 120 or a plurality of battery cells 120 may be provided. Likewise, the cooling tube 500 may also be applied to the battery cell array 20 in which the battery cell 120 is provided as a prismatic/square secondary battery 120. As in the former embodiment, even if the cell non-attachment surface 509 that does not come into contact with the battery cell 120 is formed as a non-flat surface, the cell attachment surface 507 that comes into contact with the outer surface 125 of the battery cell 120 may be formed as a flat surface, so that contact performance between the battery cell 120 and the cooling tube 500 may be secured. Therefore, even in the battery cell array 20 in which the battery cell 120 is provided as a prismatic/square secondary battery 120 as in this embodiment, the cooling tube 500 may be designed by considering only the flatness of the attachment surface with the battery cell 120 during the pressing process of the cooling tube 500, thereby securing relatively more freedom in the design of the cooling tube 500.

Therefore, according to this embodiment, even in the battery cell array 20 in which the battery cell 120 is provided as a prismatic/square secondary battery 120, the structure of the cooling tube 500 capable of securing heat transfer performance and minimizing pressure loss may be implemented. In addition, it is also possible for the battery cell array 20 to include the cooling tubes 200, 201, 202, 203 described above, depending on the design.

FIG. 22 is a drawing for illustrating a battery cell array according to still another embodiment of the present disclosure.

Since the battery cell array 30 according to this embodiment is similar to the battery cell array 10 of the former embodiment, features that are substantially identical or similar to the former embodiment will not be described again and features different from the former embodiment will be described in detail.

Referring to FIG. 22, the battery cell array 30 may include the cooling tube 500 and battery cells 130.

The battery cell 130 may be provided as a pouch-type secondary battery. One battery cell 130 or a plurality of battery cells 130 may be provided. Likewise, the cooling tube 500 may also be applied to the battery cell array 30 in which the battery cell 130 is provided as a pouch-type secondary battery 130. As in the former embodiment, even if the cell non-attachment surface 509 that does not come into contact with the battery cell 130 is formed as a non-flat surface, the cell attachment surface 507 that comes into contact with the outer surface 135 of the battery cell 130 is formed as a flat surface, so that contact performance between the battery cell 130 and the cooling tube 500 may be secured. Therefore, even in the battery cell array 30 in which the battery cell 130 of this embodiment is provided as a pouch-type secondary battery 130, the cooling tube 500 may be designed by considering only the flatness of the attachment surface with the battery cell 130 during the pressing process of the cooling tube 500, thereby securing relatively more freedom in the design of the cooling tube 500.

Therefore, according to this embodiment, even in the battery cell array 30 in which the battery cell 130 is provided as a pouch-type secondary battery 130, the structure of the cooling tube 500 capable of securing heat transfer performance and minimizing pressure loss may be implemented. In addition, it is also possible for the battery cell array 30 to include the cooling tubes 200, 201, 202, 203 described above, depending on the design.

In this way, the design structures of the cooling tubes 200, 201, 202, 203, 500 according to the above embodiments may be applied to secondary batteries of any format, in particular to all of the cylindrical secondary battery 100, the prismatic/square secondary battery 120, and the pouch-type secondary battery 130.

Therefore, according to the above embodiments, the cooling tubes 200, 201, 202, 203, 500 that may secure heat transfer performance and minimize pressure loss in secondary batteries of any format, in particular in all of the cylindrical secondary batteries 100, the prismatic secondary batteries 120, and the pouch-type secondary batteries 130 may be configured and provided.

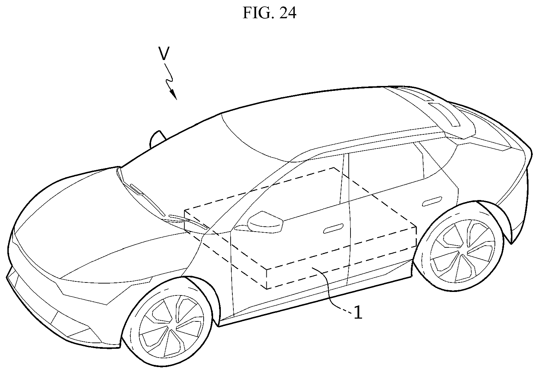

FIG. 23 is a drawing for illustrating a battery pack according to an embodiment of the present disclosure. FIG. 24 is a drawing for illustrating a vehicle according to an embodiment of the present disclosure.

Referring to FIG. 23, the battery pack 1 according to an embodiment of the present disclosure may include at least one of the battery cell array 10, 20, 30 according to the former embodiments. The battery pack 1 may further include a pack case 50 for accommodating the battery cell array 10, 20, 30.

The battery pack 1 may further include electrical components such as a BMS that controls the battery cell arrays 10, 20, 30, and/or a cooling unit such as a heatsink for cooling the battery cell arrays 10, 20, 30.

The battery pack 1 according to an embodiment of the present disclosure may further include various other components of the battery pack 1, e.g., those known at the time of filing of this application. For example, the battery pack 1 according to an embodiment of the present disclosure may further include components such as a current sensor, a fuse, and/or a service plug.

A vehicle V according to an embodiment of the present disclosure may include one or more battery packs 1 according to the present disclosure. The vehicle V according to an embodiment of the present disclosure may further include various other components included in the vehicle in addition to the battery pack 1. For example, the vehicle V according to an embodiment of the present disclosure may further include a body, a motor, a control device such as an ECU (electronic control unit), etc. in addition to the battery pack 1 according to an embodiment of the present disclosure.

Additionally or alternatively, it is also possible that the battery pack 1 according to an embodiment of the present disclosure is equipped in other devices, instruments, and facilities, such as an energy storage system using a secondary battery, e.g., in addition to the vehicle V.

According to various embodiments as described above, it is possible to provide a battery cell array 10, 20, 30 having a cooling tube 200 capable of securing heat transfer performance and minimizing pressure loss, and a battery pack 1 and a vehicle V including the same.

Moreover, the present disclosure may disclose a cooling tube designed for use in a battery pack. The cooling tube may include a plurality of channels configured to allow a cooling medium to pass therethrough. Each channel of the cooling tube may have an aspect ratio defined by a height and a width. The cooling tube may be designed to be bent to fit the first linear battery arrangement of the battery pack, thereby, e.g., ensuring that the first side of the cooling tube contacts the battery cells. The number of channels and the aspect ratio of each channel may be specifically designed to maximize the cooling efficiency of the cooling tube. This may be achieved by minimizing the number of channels to reduce pressure drop due to the cooling medium and minimizing deformation of the channels during the bending process.

According to various embodiments as described above, it is possible to provide a cooling tube of a battery pack, which may secure heat transfer performance and minimize pressure loss, and a method for configuring the cooling tube of a battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

In view of the above, it will be appreciated that the present disclosure also provides the following itemized embodiments. Any of these embodiments may additionally comprise any feature or combination of features of the cooling tube and the method for configuring a cooling tube of a battery pack according to any one of the embodiments described above.
Embodiment 1: A method for configuring a cooling tube of a battery pack, comprising:
   providing a cooling tube having a plurality of channels through which a cooling medium passes, the cooling tube defining a length, a width and a height, each channel extending across the length of the cooling tube;
   changing the number of channels N and an aspect ratio D of the channels in the cooling tube;
   determining a pressure drop ΔP across the cooling tube for the change in the number of channels N and the aspect ratio D of the channels using a mathematical formula ΔP = f(N, D, L, T), where L is the length of the cooling tube and T is a thickness of a rib separating adjacent channels;
   determining deformation δ of each channel using a mathematical formula δ = f(N, D, T) when the cooling tube is bent to fit the arrangement of battery cells of the battery pack for the change in the number of channels N and the aspect ratio D of the channels; and
   determining a relationship between factors including the number of channels N, the aspect ratio D of the channels, and the thickness T of the rib with reference to the pressure drop ΔP and the deformation δ so as to maximize cooling efficiency of the cooling tube,
   wherein the cooling efficiency is related to minimizing pressure loss and minimizing deformation.
Embodiment 2: The method for configuring a cooling tube of a battery pack according to embodiment 1,
   wherein the aspect ratio D of each channel is defined by a height and a width of each channel.
Embodiment 3: The method for configuring a cooling tube of a battery pack according to embodiment 1 or 2,
   wherein each channel is defined as a long shape with curved top and bottom ends.
Embodiment 4: The method for configuring a cooling tube of a battery pack according to any one of the preceding embodiments,
   wherein the thickness T of each rib is a minimum distance between adjacent channels.
Embodiment 5: The method for configuring a cooling tube of a battery pack according to any one of the preceding embodiments,
   wherein the step of bending the cooling tube includes a step of bending the cooling tube to fit a shape of a first linear array of the battery cells of the battery pack.
Embodiment 6: The method for configuring a cooling tube of a battery pack according to embodiment 5,
   wherein the cooling tube contacts each battery cell of the first linear array.
Embodiment 7: The method for configuring a cooling tube of a battery pack according to embodiment 5 or 6,
   wherein the cooling tube is configured to be disposed between the first linear array of the battery cells of the battery pack and a second linear array of the battery cells,
   wherein a first surface of the cooling tube contacts the first linear array, and
   wherein a second surface of the cooling tube contacts the second linear array.
Embodiment 8: The method for configuring a cooling tube of a battery pack according to any one of the preceding embodiments,
   wherein the step of determining a pressure drop ΔP includes a step of determining the pressure drop ΔP across the cooling tube for the change in each of the number of channels N and the aspect ratio D of the channels based on a viscosity and a flow rate of the cooling medium.
Embodiment 9: The method for configuring a cooling tube of a battery pack according to any one of the preceding embodiments,
   wherein the step of determining a relationship between factors includes a step of determining the relationship between the number of channels N, the aspect ratio D of the channels, the pressure drop ΔP, and the deformation δ using a correlation analysis.
Embodiment 10: The method for configuring a cooling tube of a battery pack according to any one of the preceding embodiments,
   wherein the plurality of channels includes a first channel set and a second channel set, the first channel set allowing the cooling medium to enter the cooling tube, the second channel set allowing the cooling medium to exit from the cooling tube.
Embodiment 11: The method for configuring a cooling tube of a battery pack according to embodiment 10,
   wherein the cooling tube is configured to include five or less channels for each of the first channel set and the second channel set,
   wherein the aspect ratio of each channel is 3.45 or less, and
   wherein the thickness of the rib is 0.34 mm or less.
Embodiment 12: The method for configuring a cooling tube of a battery pack according to any one of the preceding embodiments,
   wherein the pressure ΔP per unit length of each channel is 6.67 kPa/m or less for a cooling medium flow rate of 1 liter/minute.
Embodiment 13: A cooling tube of a battery pack, comprising:
   a plurality of channels configured to allow a cooling medium to flow through the cooling tube, each channel having an aspect ratio defined by a height and a width,
   wherein the cooling tube is bent to correspond to a first linear array of battery cells of the battery pack so that a first side of the cooling tube contacts the first linear array, and
   wherein the plurality of channels and the aspect ratio of each channel are configured to minimize a pressure drop of the cooling medium and minimize channel deformation that occurs when the cooling tube is bent, thereby maximizing cooling efficiency of the cooling tube.
Embodiment 14: The cooling tube of a battery pack according to embodiment 13, wherein the plurality of channels includes:
   a first set of channels for an inflow of the cooling medium; and
   a second set of channels for an outflow of the cooling medium.
Embodiment 15: The cooling tube of a battery pack according to embodiment 14,
   wherein the first channel set includes 4 to 6 channels, and
   wherein the second channel set includes 4 to 6 channels.
Embodiment 16: The cooling tube of a battery pack according to embodiment 15,
   wherein the first channel set has 5 channels, and
   wherein the second channel set has 5 channels.
Embodiment 17: The cooling tube of a battery pack according to embodiments 14 to 16,
   wherein the aspect ratio of each of the first channel set and the second channel set is 4 or less.
Embodiment 18: The cooling tube of a battery pack according to embodiment 17,
   wherein the aspect ratio of each of the first channel set and the second channel set is 3.45.
Embodiment 19: The cooling tube of a battery pack according to any one of embodiments 13 to 18,
   wherein a rib is defined between adjacent channels.
Embodiment 20: The cooling tube of a battery pack according to embodiment 19, wherein the rib has a thickness of 0.4 mm or less.
Embodiment 21: The cooling tube of a battery pack according to embodiment 20, wherein the thickness is 0.34 mm.
Embodiment 22: The cooling tube of a battery pack according to embodiments 13 to 21,
   wherein each channel is defined as a long shape with curved top and bottom ends.

## Claims

1. A method for configuring a cooling tube (200) for a battery cell array (10), in particular a battery cell array (10) of a battery pack (1), the cooling tube (200) having a plurality of channels (250, 252, 256) allowing a cooling medium to pass therethrough, each channel (250, 252, 256) extending along a length of the cooling tube (200);
determining a pressure drop ΔP across the cooling tube (200) as a function of the number of channels N in the cooling tube (200) and an aspect ratio D of the channels (250, 252, 256);
determining an amount of deformation δ of one or more channels (250, 252, 256)when the cooling tube (200) is bent to fit an arrangement of battery cells (100) of the battery cell array (10) as a function of the number of channels N and the aspect ratio D of the channels (250, 252, 256); and
determining a relationship of the number of channels N and the aspect ratio D of the channels to one or both of the pressure drop ΔP and the amount of deformation δ based on the determined pressure drop ΔP and the determined amount of deformation δ.

2. The method according to claim 1, wherein one or both of the pressure drop ΔP and the amount of deformation δ are each determined as a function of the number of channels N in the cooling tube (200), the aspect ratio D of the channels (250, 252, 256) and a thickness T of a wall separating adjacent channels (250, 252, 256) and the relationship between the number of channels N, the aspect ratio D and the thickness T to one or both of the pressure drop ΔP and the amount of deformation δ is determined therefrom.

3. The method according to claim 1 or 2, further comprising selecting one or both of the number of channels N and the aspect ratio D of the channels (250, 252, 256) based on the determined relationship and, optionally, manufacturing the cooling tube (200) with one or both of the selected number of channels N and the selected aspect ratio D of the channels (250, 252, 256), in particular wherein the method further comprises selecting the thickness T of the wall separating adjacent channels (250, 252, 256) based on the determined relationship and, optionally, the cooling tube (200) is manufactured with the selected thickness T.

4. The method according to claim 3, wherein one or both of the number of channels N and the aspect ratio D of the channels (250, 252, 256) as well as, optionally, the thickness T of the wall separating adjacent channels (250, 252, 256) are selected so as to minimize the amount of deformation δ within a preset range for the pressure drop ΔP, in particular wherein the pressure drop ΔP per unit length of each channel is 7 kPa/m or less, preferably 6.67 kPa/m or less and most preferably 6.25 kPa/m or less for a cooling medium flow rate of 1 liter/minute.

5. The method according to claim 3 or 4,
wherein the number of channels N is selected to be 12 channels or less, in particular to be between 8 and 12 channels, and/or
the aspect ratio of each channel (250, 252, 256) is selected to be 4 or less, preferably to be between 3.1 and 3.6 and most preferably to be between 3.4 and 3.5, and/or
wherein the thickness T of the wall separating adjacent channels (250, 252, 256) is selected to be 0.4 mm or less, preferably to be between 0.3 mm and 0.4 mm and most preferably to be between 0.32 mm and 0.36 mm.

6. The method according to any one of claims 3 to 5, wherein manufacturing the cooling tube (200) comprises:
providing a cooling tube (200) having one or both of the selected number of channels (250, 252, 256) and the selected aspect ratio D of the channels (250, 252, 256) as well as, optionally, the selected thickness T of the wall separating adjacent channels (250, 252, 256); and
bending the cooling tube (200) to fit the arrangement of battery cells (100) of the battery cell array (10), in particular wherein the cooling tube (200) is bent through a pressing process.

7. The method according to any one of the preceding claims, wherein:
the amount of deformation δ of the one or more channels (250, 252, 256) that is determined is the amount of deformation δ of the one or more channels (250, 252, 256) when the cooling tube (200) is bent to fit a shape of a first linear array of the battery cells (100) of the battery cell array (10), in particular such that the cooling tube (200) contacts each battery cell (100) of the first linear array; and/or
the pressure drop ΔP across the cooling tube (200) as a function of the number of channels N in the cooling tube (200) and the aspect ratio D of the channels (250, 252, 256) is determined based on one or both of a viscosity and a flow rate of the cooling medium; and/or
the relationship of the number of channels N and the aspect ratio D of the channels to the pressure drop ΔP and/or the amount of deformation δ is determined using a correlation analysis.

8. The method according to any one of the preceding claims,
wherein the plurality of channels includes a first channel set and a second channel set, the first channel set allowing the cooling medium to enter the cooling tube, the second channel set allowing the cooling medium to exit from the cooling tube, in particular wherein the pressure drop ΔP across the cooling tube (200) and the amount of deformation δ of the one or more channels (250, 252, 256) are determined as a function of the number of channels N in the cooling tube (200) with the number of channels in the first channel set being the same as the number of channels in the second channel set.

9. A cooling tube (200) for a battery cell array (10), in particular a battery cell array (10) of a battery pack (1), the cooling tube (200) comprising:
a plurality of channels (250, 252, 256) configured to allow a cooling medium to flow through the cooling tube (200),
wherein the cooling tube (200) is bent to correspond to a first array of battery cells of the battery cell array (10) for a first side of the cooling tube (200) to contact the first array, and
wherein the plurality of channels (250, 252, 256) has between 8 and 12 channels

10. The cooling tube (200) for a battery cell array (10) according to claim 9, wherein:
the plurality of channels (250, 252, 256) has 10 channels; and/or
the plurality of channels (250, 252, 256) includes a first set of channels (252) for an inflow of the cooling medium and a second set of channels (256) for an outflow of the cooling medium, in particular wherein the first channel set has 4 to 6 channels, preferably 5 channels, and/or the second channel set has 4 to 6 channels, preferably 5 channels.

11. The cooling tube (200) for a battery cell array (10) according to claim 9 or 10, wherein:
each of the channels (250, 252, 256) has an aspect ratio defined by a height (w) and a width (h) of the respective channel (250, 252, 256) and the aspect ratio of each of the channels (250, 252, 256) is 4 or less, preferably between 3.1 and 3.6, most preferably between 3.4 and 3.5, and in particular 3.45; and/or
the height (w) of each of the channels (250, 252, 256) is between 5.6 mm and 6.2 mm, preferably between 6.0 mm and 6.1 mm, and/or the width of each of the channels (250, 252, 256) is between 1.7 mm and 1.8 mm, preferably between 1.74 mm and 1.78 mm; and/or
a wall between adjacent channels has a thickness of 0.4 mm or less, wherein preferably the thickness is between 0.3 mm and 0.4 mm, most preferably between 0.32 mm and 0.36 mm and in particular 0.34 mm.

12. The cooling tube (200) for a battery cell array (10) according to any one of claims 9 to 11, wherein the plurality of channels (250, 252, 256) are configured such that a pressure drop per unit length of each of the channels is 7 kPa/m or less, preferably 6.67 kPa/m or less and most preferably 6.25 kPa/m or less, for a cooling medium flow rate of 1 liter/minute.

13. The cooling tube (200) for a battery cell array (10) according to any one of claims 9 to 12, wherein the first side of the cooling tube (200) comprises a cell attachment surface (207) for each of the battery cells (100) in the first array, the cell attachment surface (207) being a flat surface bent to fit a shape of the respective battery cell (100), in particular wherein:
a height of deformations of the cell attachment surface (207) is no more than 0.2 mm, preferably no more than 0.1 mm; and/or
a second side of the cooling tube (200) opposite to the first side comprises a cell non-attachment surface (209) opposite to each cell attachment surface (207), the cell non-attachment surfaces (209) being non-flat surfaces with greater deformation than the respective cell attachment surface (207).

14. A battery cell array (10), in particular a battery pack (1) comprising the battery cell array (10), wherein the battery cell array (10) comprises a plurality of battery cells (100) and the cooling tube (200) according to any one of claims 9 to 13, wherein optionally the plurality of battery cells (100) is arranged in at least a first array of battery cells and the first side of the cooling tube (200) contacts each battery cell (100) of the first array.

15. The battery cell array (10) of claim 14, wherein:
the plurality of battery cells (100) is arranged in at least the first array of battery cells and a second array of battery cells with the cooling tube (200) disposed between the first array of battery cells and the second array of battery cells; and/or
for each of the battery cells, a contact angle (θ) along a circumference of the respective battery cell (100) over which the battery cell (100) is in contact with the cooling tube (200) is within a range of 58.5 degrees to 61.5 degrees.
